# EUROPEAN PATENT APPLICATION

(11) **EP 4 852 417 A1**
(43) Date of publication of application: **09.12.2026**
(21) Application number: 24930573.1
(22) Date of filing: 23.12.2024
(51) Int. Cl.: H04M 1/72454

(54) **ACCIDENTAL TOUCH PREVENTION METHOD AND ELECTRONIC DEVICE**

(30) Priority: 22.03.2024 CN 202410345678; 17.12.2024 CN 202411870112
(71) Applicant: HUAWEI TECHNOLOGIES CO., LTD., Shenzhen, Guangdong 518129 (CN)
(72) Inventor: WANG, Qi, Shenzhen, Guangdong 518129 (CN); DU, Zhenguo, Shenzhen, Guangdong 518129 (CN); TIAN, Yuan, Shenzhen, Guangdong 518129 (CN); PENG, Lan, Shenzhen, Guangdong 518129 (CN); ZHOU, Dongdong, Shenzhen, Guangdong 518129 (CN); ZHOU, Yongxing, Shenzhen, Guangdong 518129 (CN)
(74) Representative: Maiwald GmbH
(86) International application number: PCT/CN2024/141473
(87) International publication number: WO 2025/194917

(57) **Abstract**

This application relates to the field of terminal technologies, and provides a mistouch prevention method and an electronic device. At least one transmitter is deployed on each of a first side and a second side of the electronic device. The first side is different from the second side. The at least one transmitter deployed on the first side includes a first transmitter, and the at least one transmitter deployed on the second side includes a second transmitter. The electronic device may use, for different postures of the electronic device, different signal transmission modes to send a signal, and determine, based on the sent signal and a received signal, whether to enable a mistouch prevention mode. The signal transmission mode includes sending a signal through the first transmitter, sending a signal through the second transmitter, or sending signals through the first transmitter and the second transmitter. Because the signal transmission mode is related to the posture of the electronic device and is therefore more targeted, the electronic device can more accurately detect, based on the sent signal, whether to enable the mistouch prevention mode. Therefore, the foregoing method can effectively prevent the electronic device from performing unintended operations.

## Description

This application claims priorities to Chinese Patent Application No. 202410345678.7, filed with the China National Intellectual Property Administration on March 22, 2024 and entitled "MISTOUCH PREVENTION METHOD AND ELECTRONIC DEVICE", and to Chinese Patent Application No. 202411870112.2, filed with the China National Intellectual Property Administration on December 17, 2024 and entitled "MISTOUCH PREVENTION METHOD AND ELECTRONIC DEVICE", both of which are incorporated herein by reference in their entireties.

### TECHNICAL FIELD

This application relates to the field of terminal technologies, and in particular, to a mistouch prevention method and an electronic device.

### BACKGROUND

Currently, to facilitate user operation, more and more devices are equipped with touchscreens. A user may tap or swipe on the screen with a finger to control the devices to execute corresponding instructions. However, when the user is not actively using the devices, accidental touches on the screen may cause the device to perform unintended operations, thereby affecting user experience. For example, when the device is placed in a pocket or backpack, if the screen of the device comes into contact with skin or an object and relative movement occurs, the device may execute the operation corresponding to such contact, for example, unlocking the screen, launching an application, or making a call. Therefore, how to prevent touchscreen devices from performing unintended operations due to mistouches is an urgent problem to be resolved currently.

### SUMMARY

This application provides a mistouch prevention method and an electronic device to effectively prevent the electronic device from performing unintended operations.

To achieve the foregoing objective, the following technical solutions are used in this application.

According to a first aspect, a mistouch prevention method is provided. The method may be performed by an electronic device. The electronic device herein may refer to the electronic device, or may refer to a processor, a circuit, a module, a logical node, a chip, a chip system, or the like that is in the electronic device and that implements the method. At least one transmitter is deployed on each of a first side and a second side of the electronic device. The first side is different from the second side. The at least one transmitter deployed on the first side of the electronic device includes a first transmitter, and the at least one transmitter deployed on the second side of the electronic device includes a second transmitter.

The method includes: determining a posture of the electronic device, determining a signal transmission mode based on the posture of the electronic device, sending a first signal based on the signal transmission mode, receiving a second signal, and determining, based on the first signal and the second signal, whether to enable a mistouch prevention mode. The signal transmission mode includes sending a signal through the first transmitter, sending a signal through the second transmitter, or sending signals through the first transmitter and the second transmitter. The second signal includes the reflected signal of the first signal.

According to the method provided in the first aspect, the electronic device may use, for different postures, different signal transmission modes to send the first signal, and determine, based on the first signal and the reflected signal of the first signal, whether to enable the mistouch prevention mode. In other words, in the method, different signal transmission modes may be designed for different postures of the electronic device, which is more targeted. Therefore, a signal sent in the signal transmission mode is used to detect whether to enable the mistouch prevention mode, so that a more accurate result can be obtained. Therefore, the foregoing method can effectively prevent the electronic device from performing unintended operations, thereby improving user experience.

In a possible implementation, when determining the signal transmission mode based on the posture of the electronic device, when the first side of the electronic device is facing downward, the signal transmission mode is sending the signal through the first transmitter.

When determining, based on the first signal and the second signal, whether to enable the mistouch prevention mode, the electronic device may send a third signal through the second transmitter when it is determined, based on the first signal and the second signal, not to enable the mistouch prevention mode. The electronic device may receive a fourth signal, where the fourth signal includes a reflected signal of the third signal. The electronic device may further determine, based on the first signal, the second signal, the third signal, and the fourth signal, whether to enable the mistouch prevention mode.

According to the foregoing possible implementation, when the first side of the electronic device is facing downward, the signal transmission mode may be sending the signal through the first transmitter. In addition, when determining, based on the first signal and the second signal, whether to enable the mistouch prevention mode, the electronic device may first perform determining based on a signal sent by the first transmitter and a received signal. If the electronic device determines, based on the signal sent by the first transmitter and the received signal, not to enable the mistouch prevention mode, the electronic device may send a signal through the second transmitter. Finally, whether to enable the mistouch prevention mode is determined comprehensively based on the signal sent by the first transmitter and the received signal, and the signal sent by the second transmitter and a received signal.

In this way, when determining, based on the first signal and the second signal, to enable the mistouch prevention mode, the electronic device does not need to switch to the second transmitter for signal sending and receiving. This can reduce a detection delay and power consumption of the electronic device. When determining, based on the first signal and the second signal, not to enable the mistouch prevention mode, the electronic device may further perform comprehensive determining with reference to a signal sent by the second transmitter and a received signal that are on the other side. In this way, a more accurate result can be obtained. Therefore, the foregoing method can effectively prevent the electronic device from performing unintended operations, thereby improving user experience.

If a confidence level is greater than a threshold, ultrasonic channel switching may not be performed, thereby reducing a detection delay and power consumption; or if a confidence level is less than a threshold, a signal of another speaker may be used for determining, thereby improving detection accuracy.

In a possible implementation, when determining the signal transmission mode based on the posture of the electronic device, when the first side of the electronic device is facing upward, the signal transmission mode is sending the signal through the second transmitter.

When determining, based on the first signal and the second signal, whether to enable the mistouch prevention mode, the electronic device may send a third signal through the first transmitter when it is determined, based on the first signal and the second signal, not to enable the mistouch prevention mode.

The electronic device may receive a fourth signal, where the fourth signal includes a reflected signal of the third signal. The electronic device may further determine, based on the first signal, the second signal, the third signal, and the fourth signal, whether to enable the mistouch prevention mode.

According to the foregoing possible implementation, when the first side of the electronic device is facing upward, the signal transmission mode may be sending the signal through the second transmitter. In addition, when determining, based on the first signal and the second signal, whether to enable the mistouch prevention mode, the electronic device may first perform determining based on a signal sent by the second transmitter and a received signal. If the electronic device determines, based on the signal sent by the second transmitter and the received signal, not to enable the mistouch prevention mode, the electronic device may send a signal through the first transmitter. Finally, whether to enable the mistouch prevention mode is determined comprehensively based on the signal sent by the first transmitter and the received signal, and the signal sent by the second transmitter and a received signal.

In this way, when determining, based on the first signal and the second signal, to enable the mistouch prevention mode, the electronic device does not need to switch to the first transmitter for signal sending and receiving. This can reduce a detection delay and power consumption of the electronic device. When determining, based on the first signal and the second signal, not to enable the mistouch prevention mode, the electronic device may further perform comprehensive determining with reference to a signal sent by the first transmitter and a received signal that are on the other side. In this way, a more accurate result can be obtained. Therefore, the foregoing method can effectively prevent the electronic device from performing unintended operations, thereby improving user experience.

In a possible implementation, the determining the signal transmission mode based on the posture of the electronic device includes: when the first side of the electronic device is facing upward, the signal transmission mode is sending the signal through the second transmitter; when the first side of the electronic device is facing downward, the signal transmission mode is sending the signal through the first transmitter; or when the electronic device is placed horizontally, the signal transmission mode is sending the signal through the first transmitter and/or the second transmitter.

According to the foregoing possible implementation, different signal transmission modes may be designed for the electronic device when the first side of the electronic device is facing upward, when the first side of the electronic device is facing downward, and when the electronic device is placed horizontally. Therefore, whether the mistouch prevention mode is to be enabled can be more accurately detected based on the signal sent by the electronic device, thereby improving user experience.

In a possible implementation, the first side of the electronic device is facing upward when an included angle between a first direction and a second direction is greater than or equal to a first threshold; the first side of the electronic device is facing downward when an included angle between a first direction and a second direction is less than or equal to a second threshold; or the electronic device is placed horizontally when an included angle between a first direction and a second direction is less than a first threshold and greater than a second threshold. The first direction is a direction from the second side of the electronic device to the first side of the electronic device, and the second direction is a direction of gravity.

According to the foregoing possible implementation, postures of the electronic device may be classified based on the included angle between the first direction and the second direction, so that the signal transmission mode can be determined based on the posture of the electronic device.

In a possible implementation, at least one receiver is deployed on each of the first side and the second side, the at least one receiver deployed on the first side includes a first receiver, and the at least one receiver deployed on the second side includes a second receiver; and the receiving the second signal includes: receiving the second signal through the first receiver and/or receiving the second signal through the second receiver.

According to the foregoing possible implementation, the electronic device may receive the second signal through a receiver disposed on the first side and/or a receiver disposed on the second side. For example, when the first transmitter transmits the first signal, the second signal may be received through the first receiver. Because both the first receiver and the first transmitter are deployed on the first side of the electronic device and are very close to each other, energy attenuation of the second signal received through the first receiver is smaller than that of the first signal, so that accuracy of determining whether to enable the mistouch prevention mode is improved. When the second transmitter transmits the first signal, the second signal may be received through the second receiver. Because both the second receiver and the second transmitter are deployed on the second side of the electronic device and are very close to each other, energy attenuation of the second signal received through the second receiver is smaller than that of the first signal, so that accuracy of determining whether to enable the mistouch prevention mode is improved. When both the first transmitter and the second transmitter transmit the first signal, the second signal may be received through the first receiver and/or the second receiver.

In a possible implementation, the determining, based on the first signal and the second signal, whether to enable the mistouch prevention mode includes: determining transmission status information of the first signal based on the first signal and the second signal, and determining, based on the transmission status information, whether to enable the mistouch prevention mode.

According to the foregoing possible implementation, whether to enable the mistouch prevention mode may be determined based on the transmission status information of the first signal, thereby improving user experience.

In a possible implementation, the transmission status information includes a delay (referred to as a first delay below) between the first signal and the second signal; and the determining, based on the transmission status information, whether to enable the mistouch prevention mode includes: enabling the mistouch prevention mode when the first delay is less than or equal to a first duration; or skip enabling the mistouch prevention mode when the first delay is greater than a first duration.

According to the foregoing possible implementation, whether to enable the mistouch prevention mode may be determined based on the delay between the first signal and the second signal. It may be understood that, that the first delay is less than or equal to the first duration indicates that the first signal is received by the electronic device after being transmitted over a short distance. For example, the electronic device is in a pocket or a backpack, and the first signal is received by the electronic device after being reflected by the pocket or the backpack within the first duration. Therefore, when the first delay is less than or equal to the first duration, the electronic device may be blocked, and the electronic device may enable the mistouch prevention mode. That the first delay is greater than the first duration indicates that the first signal is received by the electronic device after being transmitted over a long distance. Therefore, the electronic device may not be blocked, and the electronic device may not enable the mistouch prevention mode.

In a possible implementation, the transmission status information includes a first delay and a quantity (referred to as a first quantity below) of second signals received in different directions; and the determining, based on the transmission status information, whether to enable the mistouch prevention mode includes: enabling the mistouch prevention mode when the first delay is less than or equal to a first duration and the first quantity is greater than or equal to a third threshold; or skipping enabling the mistouch prevention mode when the first delay is greater than a first duration or the first quantity is less than a third threshold.

According to the foregoing possible implementation, whether to enable the mistouch prevention mode may be determined based on the delay between the first signal and the second signal and the quantity of second signals received in different directions. In other words, the electronic device may comprehensively consider a plurality of factors to determine whether to enable the mistouch prevention mode, so that accuracy of a detection result can be improved. It may be understood that, that the first delay is less than or equal to the first duration and the first quantity is greater than or equal to the third threshold indicates that the first signal is received by the electronic device after being transmitted over a short distance, and the first signal is reflected multiple times during transmission over the short distance. For example, the electronic device is in a pocket or a backpack, and the first signal is received by the electronic device after being reflected by the pocket or the backpack multiple times within the first duration. Therefore, when the first delay is less than or equal to the first duration and the first quantity is greater than or equal to the third threshold, the electronic device may be blocked, and the electronic device may enable the mistouch prevention mode. That the first delay is greater than the first duration indicates that the first signal is received by the electronic device after being transmitted over a long distance. Therefore, the electronic device may not be blocked, and the electronic device may not enable the mistouch prevention mode. That the first quantity is less than the third threshold indicates that the first signal is not frequently reflected. Therefore, the electronic device may not be blocked, and the electronic device may not enable the mistouch prevention mode.

In a possible implementation, the transmission status information includes a percentage (referred to as a first percentage below) of signal strength of the second signal in signal strength of the first signal; and the determining, based on the transmission status information, whether to enable the mistouch prevention mode includes: enabling the mistouch prevention mode when the first percentage is greater than or equal to a fourth threshold; or skipping enabling the mistouch prevention mode when the first percentage is less than a fourth threshold.

According to the foregoing possible implementation, whether to enable the mistouch prevention mode may be determined based on the percentage of the signal strength of the second signal in the signal strength of the first signal, thereby improving user experience. It may be understood that, that the first percentage is greater than or equal to the fourth threshold indicates that the first signal is slightly attenuated during transmission. For example, the electronic device is in a pocket or a backpack. The first signal is reflected by the pocket or the backpack after being transmitted over a short distance, and then is received by the electronic device. Therefore, signal strength of the second signal received by the electronic device is not significantly attenuated compared with the first signal. Therefore, when the first percentage is greater than or equal to the fourth threshold, the electronic device may be blocked, and the electronic device may enable the mistouch prevention mode. That the first percentage is less than the fourth threshold indicates that the first signal is greatly attenuated during transmission. Therefore, the electronic device may not be blocked, and the electronic device does not enable the mistouch prevention mode.

In a possible implementation, the transmission status information includes a first percentage and a first quantity; and the determining, based on the transmission status information, whether to enable the mistouch prevention mode includes: enabling the mistouch prevention mode when the first percentage is greater than or equal to a fourth threshold and the first quantity is greater than or equal to a fifth threshold; or skipping enabling the mistouch prevention mode when the first percentage is less than a fourth threshold or the first quantity is less than a fifth threshold.

According to the foregoing possible implementation, whether to enable the mistouch prevention mode may be determined based on the percentage of the signal strength of the second signal in the signal strength of the first signal and the quantity of second signals received in different directions. In other words, the electronic device may determine, in combination with a plurality of factors, whether to enable the mistouch prevention mode, so that accuracy of a detection result can be improved. It may be understood that, that the first percentage is greater than or equal to the fourth threshold and the first quantity is greater than or equal to the fifth threshold indicates that the first signal is slightly attenuated during transmission, and the first signal is reflected multiple times during transmission. For example, the electronic device is in a pocket or a backpack, the first signal is received by the electronic device after being transmitted over a short distance, and is reflected multiple times in the pocket or the backpack over the short transmission distance. Therefore, signal strength of the received second signal is not significantly attenuated compared with the first signal. Therefore, when the first percentage is greater than or equal to the fourth threshold and the first quantity is greater than or equal to the fifth threshold, the electronic device may be blocked, and the electronic device enables the mistouch prevention mode. That the first percentage is less than the fourth threshold indicates that the first signal is greatly attenuated during transmission. Therefore, the electronic device may not be blocked, and the electronic device does not enable the mistouch prevention mode. That the first quantity is less than the fifth threshold indicates that the first signal is not frequently reflected. Therefore, the electronic device may not be blocked, and the electronic device may not enable the mistouch prevention mode.

In a possible implementation, the determining, based on the first signal and the second signal, whether to enable the mistouch prevention mode includes: enabling the mistouch prevention mode when signal strength of the second signal is greater than or equal to first strength, where the first strength is obtained based on signal strength of the first signal.

According to the foregoing possible implementation, in some cases, for example, when a 1st reflected signal of the first signal overlaps a direct signal, the signal strength of the second signal is strong, for example, may be greater than or equal to 80% of the signal strength of the first signal. Therefore, the electronic device may directly determine that the electronic device is blocked, to determine to enable the mistouch prevention mode, thereby simplifying an operation of the electronic device.

In a possible implementation, the method further includes: performing steps 1 to 4 multiple times; and determining, based on first signals and second signals that are obtained by performing steps 1 to 4 the multiple times, whether to enable the mistouch prevention mode. Step 1: Determine a posture of the electronic device. Step 2: Determine a signal transmission mode based on the posture of the electronic device, where the signal transmission mode includes sending a signal through the first transmitter, send a signal through the second transmitter, or send signals through the first transmitter and the second transmitter. Step 3: Send a first signal based on the signal transmission mode. Step 4: Receive a second signal.

According to the foregoing possible implementation, whether the electronic device needs to enable the mistouch prevention mode may be determined multiple times, and whether the mistouch prevention mode is actually enabled is determined based on results obtained through the multiple times of determining. For example, if M results among the N results indicate to enable the mistouch prevention mode, the electronic device 10 enables the mistouch prevention mode. N is an integer greater than 1, and M is an integer greater than 0 and less than N. In this way, a more accurate result can be obtained.

In a possible implementation, the method further includes: determining a motion state of the electronic device, and determining a period of the first signal based on the motion state.

According to the foregoing possible implementation, the period of the first signal may be determined based on the motion state. For example, when the electronic device is in a moving state, the electronic device may shorten the period of the first signal or increase a frequency of the first signal, to increase the success rate of detecting the direct signal and the reflected signal of the first signal; or when the electronic device is in a static state, the electronic device may prolong the period of the first signal or decrease a frequency of the first signal, to reduce power consumption of the electronic device. Optionally, the motion state of the electronic device may be obtained by using an acceleration sensor and/or a gyro sensor.

In a possible implementation, the method further includes: determining ambient noise of the electronic device, and determining the transmit power of the first signal based on the noise.

According to the foregoing possible implementation, the electronic device may determine the transmit power of the first signal based on the ambient noise. For example, when the ambient noise of the electronic device is high, the electronic device may increase the transmit power of the first signal, to increase a success rate of detecting a reflected signal or a direct signal of the first signal. When the ambient noise of the electronic device is low, the electronic device may decrease the transmit power of the first signal, to reduce power consumption of the electronic device. Optionally, the electronic device may sense noise by using a microphone and/or the receiver deployed on the electronic device, to determine the transmit power of the first signal.

In a possible implementation, determining to enable the mistouch prevention mode, the method further includes: performing a first operation, where the first operation includes at least one of the following: a screen lock operation, dimming a screen of the electronic device, stopping identifying a physiological feature of a user, stopping identifying a gesture of a user, stopping screen unlocking, or stopping responding to an operation of a user.

According to the foregoing possible implementation, after determining to enable the mistouch prevention mode, the electronic device may perform one or more of the foregoing operations, to avoid responding to unintended operations of the user.

In a possible implementation, when determining, based on the first signal, the second signal, the third signal, and the fourth signal, whether to enable the mistouch prevention mode, the electronic device may determine transmission status information of the first signal based on the first signal and the second signal, and determine transmission status information of the third signal based on the third signal and the fourth signal. Then, the electronic device may determine, based on the transmission status information of the first signal and the transmission status information of the third signal, whether to enable the mistouch prevention mode.

According to the foregoing possible implementation, whether to enable the mistouch prevention mode may be comprehensively determined based on the transmission status information of the first signal and the transmission status information of the third signal, thereby improving accuracy of determining whether to enable the mistouch prevention mode, and therefore improving user experience.

In a possible implementation, when determining, based on the first signal, the second signal, the third signal, and the fourth signal, whether to enable the mistouch prevention mode, the electronic device enables the mistouch prevention mode when the signal strength of the second signal is greater than or equal to first strength and/or the signal strength of the fourth signal is greater than or equal to second strength. The first strength is obtained based on the signal strength of the first signal, and the second strength is obtained based on the signal strength of the third signal.

According to the foregoing possible implementation, in some cases, for example, when a 1st reflected signal of the first signal overlaps a direct signal, the signal strength of the second signal is strong, for example, may be greater than or equal to 80% of the signal strength of the first signal. Therefore, the electronic device may directly determine that the electronic device is blocked. Similarly, when a 1st reflected signal of the third signal overlaps a direct signal, the signal strength of the fourth signal is strong, for example, may be greater than or equal to 80% of the signal strength of the third signal. Therefore, the electronic device may also directly determine that the electronic device is blocked. Therefore, by determining, with reference to the signal strength of the first signal and/or the signal strength of the third signal, that the electronic device is blocked, accuracy of determining whether to enable the mistouch prevention mode can be improved, and an operation of the electronic device can be simplified.

According to a second aspect, a chip is provided. The chip is deployed in an electronic device. At least one transmitter connected to the chip is deployed on each of a first side and a second side of the electronic device. The first side is different from the second side. The at least one transmitter deployed on the first side of the electronic device includes a first transmitter, and the at least one transmitter deployed on the second side of the electronic device includes a second transmitter. The chip may be configured to perform the following operations: determining a posture of the electronic device, determining a signal transmission mode based on the posture of the electronic device, controlling, based on the signal transmission mode, the first transmitter to send a signal and/or the second transmitter to send a signal, obtaining a second signal, and determining, based on the first signal and the second signal, whether to enable the mistouch prevention mode. The signal transmission mode includes sending a signal through the first transmitter, sending a signal through the second transmitter, or sending signals through the first transmitter and the second transmitter. The second signal includes the reflected signal of the first signal.

In a possible implementation, the determining the signal transmission mode based on the posture of the electronic device includes: when the first side of the electronic device is facing upward, the signal transmission mode is sending the signal through the second transmitter; when the first side of the electronic device is facing downward, the signal transmission mode is sending the signal through the first transmitter; or when the electronic device is placed horizontally, the signal transmission mode is sending the signal through the first transmitter and/or the second transmitter.

In a possible implementation, the first side of the electronic device is facing upward when an included angle between a first direction and a second direction is greater than or equal to a first threshold; the first side of the electronic device is facing downward when an included angle between a first direction and a second direction is less than or equal to a second threshold; or the electronic device is placed horizontally when an included angle between a first direction and a second direction is less than a first threshold and greater than a second threshold. The first direction is a direction from the second side of the electronic device to the first side of the electronic device, and the second direction is a direction of gravity.

In a possible implementation, at least one receiver connected to the chip is deployed on each of the first side and the second side, the at least one receiver deployed on the first side includes a first receiver, and the at least one receiver deployed on the second side includes a second receiver; and the obtaining second signal includes: controlling the first receiver to receive the second signal and/or the second receiver to receive the second signal, and obtaining the second signal from the first receiver and/or the second receiver.

In a possible implementation, the determining, based on the first signal and the second signal, whether to enable the mistouch prevention mode includes: determining transmission status information of the first signal based on the first signal and the second signal, and determining, based on the transmission status information, whether to enable the mistouch prevention mode.

In a possible implementation, the transmission status information includes a delay between the first signal and the second signal; and the determining, based on the transmission status information, whether to enable the mistouch prevention mode includes: enabling the mistouch prevention mode when the delay is less than or equal to a first duration; or skip enabling the mistouch prevention mode when the delay is greater than a first duration.

In a possible implementation, the transmission status information includes a delay between the first signal and the second signal and a quantity of second signals received in different directions; and the determining, based on the transmission status information, whether to enable the mistouch prevention mode includes: enabling the mistouch prevention mode when the delay is less than or equal to a first duration and the quantity is greater than or equal to a third threshold; or skipping enabling the mistouch prevention mode when the delay is greater than a first duration or the quantity is less than a third threshold.

In a possible implementation, the transmission status information includes a percentage of signal strength of the second signal to signal strength of the first signal; and the determining, based on the transmission status information, whether to enable the mistouch prevention mode includes: enabling the mistouch prevention mode when the percentage is greater than or equal to a fourth threshold; or skipping enabling the mistouch prevention mode when the percentage is less than a fourth threshold.

In a possible implementation, the transmission status information includes a percentage of signal strength of the second signal to signal strength of the first signal and a quantity of second signals received in different directions; and the determining, based on the transmission status information, whether to enable the mistouch prevention mode includes: enabling the mistouch prevention mode when the percentage is greater than or equal to a fourth threshold and the quantity is greater than or equal to a fifth threshold; or skipping enabling the mistouch prevention mode when the percentage is less than a fourth threshold or the quantity is less than a fifth threshold.

In a possible implementation, the determining, based on the first signal and the second signal, whether to enable the mistouch prevention mode includes: enabling the mistouch prevention mode when signal strength of the second signal is greater than or equal to first strength, where the first strength is obtained based on signal strength of the first signal.

In a possible implementation, the chip may perform steps 1 to 4 multiple times; and determine, based on first signals and second signals that are obtained by performing steps 1 to 4 the multiple times, whether to enable the mistouch prevention mode. Step 1: Determine a posture of the electronic device. Step 2: Determine a signal transmission mode based on the posture of the electronic device, where the signal transmission mode includes sending a signal through the first transmitter, send a signal through the second transmitter, or send signals through the first transmitter and the second transmitter. Step 3: Send a first signal based on the signal transmission mode. Step 4: Receive a second signal.

In a possible implementation, the chip may determine a motion state of the electronic device, and determine a period of the first signal based on the motion state.

In a possible implementation, the chip may determine ambient noise of the electronic device, and determine the transmit power of the first signal based on the noise.

In a possible implementation, the chip may perform the first operation after determining to enable the mistouch prevention mode. The first operation includes at least one of the following: a screen lock operation, dimming a screen of the electronic device, stopping identifying a physiological feature of a user, stopping identifying a gesture of a user, stopping screen unlocking, or stopping responding to an operation of a user.

According to a third aspect, an electronic device is provided, to implement the foregoing method. The electronic device may be the electronic device in the first aspect. The electronic device includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible implementation, the electronic device may include a processing module and a transceiver module. The processing module may be configured to implement a processing function in any one of the foregoing aspects and the possible implementations of the foregoing aspects. The processing module may be, for example, a processor. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, or a transceiver.

In a possible implementation, the transceiver module includes a sending module and a receiving module, respectively configured to implement sending and receiving functions in any one of the foregoing aspects and the possible implementations of the foregoing aspects.

According to a fourth aspect, an electronic device is provided, including: a processor, configured to execute a computer program (or computer-executable instructions) stored in a memory, and/or cause the electronic device to perform the method in the first aspect by using a logic circuit. The electronic device may be the electronic device in the first aspect. Optionally, there may be one or more processors.

In a possible implementation, the electronic device further includes the memory.

In a possible implementation, the processor and the memory are integrated together; or the memory is independent of the processor.

In a possible implementation, the electronic device is a chip or a chip system. Optionally, when the electronic device is a chip system, the electronic device may include a chip, or may include a chip and another discrete component.

According to a fifth aspect, an electronic device is provided, including a processor and an interface circuit. The interface circuit is configured to receive a computer program or instructions and transmit the computer program or the instructions to the processor. The processor is configured to execute the computer program or the instructions, to cause the electronic device to perform the method in the first aspect. The electronic device may be the electronic device in the first aspect. Optionally, there may be one or more processors.

In a possible implementation, the electronic device is a chip or a chip system. Optionally, when the electronic device is a chip system, the electronic device may include a chip, or may include a chip and another discrete component.

According to a sixth aspect, a computer-readable storage medium is provided. The computer-readable storage medium stores instructions; and when the instructions are run on a computer, the computer is caused to perform the method in the first aspect.

According to a seventh aspect, a computer program product including instructions is provided. When the computer program product runs on a computer, the computer is caused to perform the method in the first aspect.

For technical effects brought by any possible implementation of the second aspect to the seventh aspect, refer to technical effects brought by the first aspect or different possible implementations of any aspect. Details are not described herein again.

It may be understood that the solutions in the foregoing aspects may be combined on a premise that the solutions are not contradictory.

### BRIEF DESCRIPTION OF DRAWINGS

FIG. 1 is a diagram of a hardware structure of an electronic device according to this application;
FIG. 2 is a flowchart 1 of a mistouch prevention method according to this application;
FIG. 3 is a diagram of a three-dimensional coordinate system of a mobile phone according to this application;
FIG. 4 is a diagram 1 of a posture of an electronic device 10 according to this application;
FIG. 5 is a diagram 2 of a posture of an electronic device 10 according to this application;
FIG. 6 is a diagram 3 of a posture of an electronic device 10 according to this application;
FIG. 7 is a diagram of a cross-correlation between a first signal and a second signal according to this application;
FIG. 8 is a flowchart 2 of a mistouch prevention method according to this application; and
FIG. 9 is a diagram of a structure of an electronic device according to this application.

### DESCRIPTION OF EMBODIMENTS

To prevent touchscreen devices from performing unintended operations, this application provides a mistouch prevention method. The method may be applied to a touchscreen electronic device, or a processor, a circuit, a module, a logical node, a chip, a chip system, or the like in the electronic device. For ease of description, this application is described by using an example in which the method is applied to an electronic device. At least one transmitter is deployed on each of a first side and a second side of the electronic device. The first side is different from the second side. For example, the first side is the bottom of the electronic device, and the second side is the top of the electronic device; or the first side is a left side of the electronic device, and the second side is a right side of the electronic device. The at least one transmitter deployed on the first side includes a first transmitter, and the at least one transmitter deployed on the second side includes a second transmitter. In the method, the electronic device may determine a posture of the electronic device, and determine a signal transmission mode based on the posture of the electronic device. The signal transmission mode includes sending a signal through the first transmitter, sending a signal through the second transmitter, or sending signals through the first transmitter and the second transmitter. Subsequently, the electronic device may send a first signal based on the signal transmission mode, receive a second signal (for example, a reflected signal of the first signal), and determine, based on the first signal and the second signal, whether to enable a mistouch prevention mode.

In the foregoing method, the electronic device may use, for different postures of the electronic device, different signal transmission modes to send a signal, and determine, based on the sent signal and a received signal, whether to enable a mistouch prevention mode. In other words, in this application, different signal transmission modes may be designed for different postures of the electronic device, which is more targeted. Therefore, a signal sent in the signal transmission mode is used to detect whether to enable the mistouch prevention mode, so that a more accurate result can be obtained. Therefore, the foregoing method can effectively prevent the electronic device from performing unintended operations, thereby improving user experience.

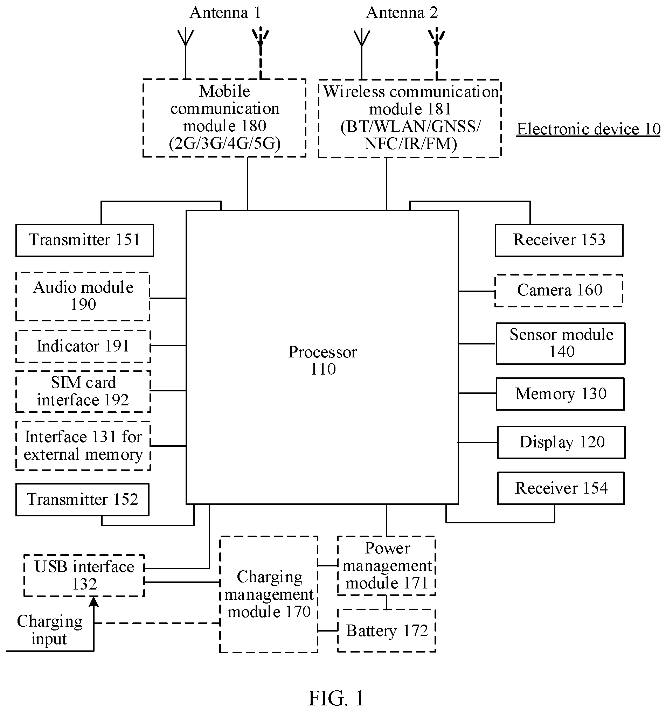

It may be understood that the electronic device may be any device that has a touchscreen and that has at least one transmitter deployed on different sides. For example, the electronic device is a handheld device, a wearable device, or the like. For example, the electronic device is a mobile phone (mobile phone), a tablet computer, a notebook computer, a palmtop computer, a mobile internet device (mobile internet device, MID), an ultra-mobile personal computer (ultra-mobile personal computer, UMPC), a satellite terminal, or a smartwatch. A structure of the electronic device is described below by using the electronic device 10 shown in FIG. 1 as an example.

FIG. 1 is a diagram of a hardware structure of an electronic device according to this application. The electronic device 10 in FIG. 1 may specifically include a processor 110, a display 120, a memory 130, and a sensor module 140. The electronic device 10 further includes at least one of a transmitter 151 or a transmitter 152, and at least one of a receiver 153 or a receiver 154. Optionally, the electronic device 10 further includes at least one of the following: a camera 160, an interface 131 for external memory, a universal serial bus (universal serial bus, USB) interface 132, a charging management module 170, a power management module 171, a battery 172, an antenna 1, an antenna 2, a mobile communication module 180, a wireless communication module 181, an audio module 190, an indicator 191, a subscriber identity module (subscriber identity module, SIM) card interface 192, or the like. Details are described below.

The processor 110 may include one or more processing units. For example, the processor 110 may include at least one of the following: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), or the like. Different processing units may be independent components, or may be integrated into one or more processors. The controller may generate an operation control signal based on an instruction operation code and a time sequence signal, to complete control of instruction reading and instruction execution.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The memory 130 may be configured to store computer-executable program code. The executable program code includes instructions. The memory 130 may include a program storage area and a data storage area. The program storage area may store an operating system, an application required by at least one function (such as a sound playing function or an image playing function), and the like. The data storage area can store data (such as audio data and a phone book) and the like that are created during use of the electronic device 10. In addition, the memory 130 may include a high-speed random access memory, and may further include a non-volatile memory, for example, at least one magnetic disk storage device, a flash memory, or a universal flash storage (universal flash storage, UFS). The processor 110 performs various functional applications and data processing of the electronic device 10 by running instructions stored in the memory 130 and/or instructions stored in the memory disposed in the processor. The processor 110 and the memory 130 may be integrated together, or may be independently deployed.

The interface 131 for external memory may be configured to connect to an external storage card, for example, a micro SD card, to extend a storage capability of the electronic device 10. The external memory card communicates with the processor 110 through the interface 131 for external memory, to implement a data storage function. For example, files such as music and videos are stored in the external storage card.

The transmitter 151 or the transmitter 152 is configured to send a signal, for example, send a sound wave signal. The receiver 153 or the receiver 154 is configured to receive a signal, for example, receive a sound wave signal. The sound wave may be an ultrasonic wave, an infrasonic wave, or the like. The processor 110 may control, based on sound wave characteristics, for example, line of sight (line of sight, LoS) propagation, and reflection or refraction that occurs on different medium interfaces, the transmitter 151 to transmit a sound wave signal and/or the transmitter 152 to transmit a sound wave signal, the receiver 153 and/or the receiver 154 may receive a reflected signal of the sound wave signal, and then indicate the received sound wave signal to the processor 110. The processor 110 may determine, based on the sent sound wave signal and the received sound wave signal, whether the electronic device 10 needs to enable the mistouch prevention mode, thereby improving user experience.

Optionally, the transmitter 151 or the transmitter 152 may be a component like a speaker of the electronic device 10, and the receiver 153 or the receiver 154 may be a component like a microphone of the electronic device 10. This is not limited.

FIG. 1 is illustrated by using an example in which the transmitter 151 and the receiver 153 are located at the top of the electronic device 10, and the transmitter 152 and the receiver 154 are located at the bottom of the electronic device 10. In specific application, the transmitter 151 and the receiver 153 may also be located on a left side of the electronic device 10, and the transmitter 152 and the receiver 154 may also be located on a right side of the electronic device 10. This is not limited.

The sensor module 140 may include at least one sensor. For example, the sensor module 140 includes a touch sensor and an acceleration sensor. Optionally, the sensor module 140 further includes at least one of the following sensors: a gyro sensor, an optical proximity sensor, an ambient light sensor, a distance sensor, or a fingerprint sensor. The following briefly describes functions of the sensors.

The touch sensor is also referred to as a "touch component". The touch sensor may be disposed on the display 120, and the touch sensor and the display 120 form a touchscreen, which is also referred to as a "touch screen". The touch sensor is configured to detect a touch operation performed on or near the touch sensor. The touch sensor may transfer the detected touch operation to the application processor to determine a type of the touch event. A visual output related to the touch operation may be provided through the display 120. In some other embodiments, the touch sensor may alternatively be disposed on a surface of the electronic device 10 at a position different from that of the display 120.

The acceleration sensor may detect magnitudes of accelerations of the electronic device 10 in various directions (generally on three axes), and may detect magnitude and a direction of gravity when the electronic device 10 is still. The acceleration sensor may be further configured to identify a posture of the electronic device, and is used in an application such as switching between a landscape mode and a portrait mode or a pedometer.

The gyro sensor may be configured to determine a motion posture of the electronic device 10. In some embodiments, angular velocities of the electronic device 10 around three axes (namely, axes x, y, and z) may be determined through the gyro sensor. The distance sensor is configured to measure a distance.

The electronic device 10 may measure a distance in an infrared or laser manner. In some embodiments, in a photographing scenario, the electronic device 10 may measure a distance by using the distance sensor to implement quick focusing. The optical proximity sensor may include, for example, a light-emitting diode (LED) and a light detector such as a photodiode. The light-emitting diode may be an infrared light-emitting diode. The electronic device 10 emits infrared light by using the light-emitting diode. The electronic device 10 detects infrared reflected light from a nearby object by using the photodiode. When sufficient reflected light is detected, it may be determined that there is an object near the electronic device 10. When insufficient reflected light is detected, the electronic device 10 may determine that there is no object near the electronic device 10. The electronic device 10 may detect, by using the optical proximity sensor, that a user holds the electronic device 10 close to the ear for a call, to automatically turn off a screen to save power. The optical proximity sensor may also be used in a smart cover mode or a pocket mode for automatic screen unlocking or locking.

The fingerprint sensor is configured to collect a fingerprint. The electronic device 10 may implement fingerprint-based unlocking, application access locking, fingerprint-based photographing, fingerprint-based call answering, and the like by using a feature of the collected fingerprint.

The ambient light sensor is configured to sense ambient light brightness. The electronic device 10 may adaptively adjust brightness of the display 120 based on the sensed ambient light brightness. The ambient light sensor may also be configured to automatically adjust white balance during photographing. The ambient light sensor may also cooperate with the optical proximity sensor to detect whether the electronic device 10 is in a pocket, to avoid mistouches.

The electronic device 10 implements a display function through the GPU, the display 120, the application processor, and the like. The GPU is a microprocessor for image processing, and is connected to the display 120 and the application processor. The GPU is configured to: perform mathematical and geometric computation, and render an image. The processor 110 may include one or more GPUs, which execute program instructions to generate or change display information.

The display 120 is configured to display an image, a video, and the like. The display 120 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 10 may include one or N displays 120, where N is a positive integer greater than 1.

The electronic device 10 may implement an audio function by using the audio module 190, the application processor, and the like, for example, music playback, recording, or the like. The audio module 190 is configured to convert digital audio information into an analog audio signal for output, and is also configured to convert analog audio input into a digital audio signal. The audio module 190 may be further configured to code and decode an audio signal. In some embodiments, the audio module 190 may be disposed in the processor 110, or some functional modules in the audio module 190 are disposed in the processor 110. Optionally, the audio module 190 may be connected to one or more of a speaker, a receiver, a microphone, or a headset interface, to implement an audio function, for example, music playback or recording.

The electronic device 10 may implement a photographing function by using the camera 160, the video codec, the GPU, the display 120, the application processor, and the like.

The camera 160 is configured to capture a static image or a video. In some embodiments, the electronic device 10 may include one or N cameras 160, where N is a positive integer greater than 1. If the electronic device 10 includes N cameras, one of the N cameras is a primary camera.

The charging management module 170 is configured to receive charging input from a charger. The charger may be a wireless charger or a wired charger. In some embodiments of wired charging, the charging management module 170 may receive a charging input of a wired charger through the USB interface 132. In some embodiments of wireless charging, the charging management module 170 may receive a wireless charging input through a wireless charging coil of the electronic device 10. The charging management module 170 supplies power to the electronic device through the power management module 171 while charging the battery 172.

The power management module 171 is configured to be connected to the battery 172, the charging management module 170, and the processor 110. The power management module 171 receives an input from the battery 172 and/or an input from the charging management module 170, to supply power to the processor 110, the memory 130, the display 120, the camera 160, the wireless communication module 181, and the like. The power management module 171 may be further configured to monitor parameters such as a battery capacity, a battery cycle count, and a battery health status (electric leakage or impedance). In some other embodiments, the power management module 171 may alternatively be disposed in the processor 110. In some other embodiments, the power management module 171 and the charging management module 170 may alternatively be disposed in a same component.

A wireless communication function of the electronic device 10 may be implemented through the antenna 1, the antenna 2, the mobile communication module 180, the wireless communication module 181, the modem processor, the baseband processor, and the like.

The antenna 1 and the antenna 2 are configured to transmit and receive an electromagnetic wave signal. Each antenna in the electronic device 10 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 180 may provide a wireless communication solution applied to the electronic device 10, including wireless communication such as 2nd generation (2nd generation, 2G) mobile communication, 3rd generation (3rd generation, 3G) mobile communication, 4th generation (4th generation, 4G) mobile communication, or 5th generation (5th generation, 5G) mobile communication. The mobile communication module 180 may include at least one filter, a switch, a power amplifier, a low noise amplifier (low noise amplifier, LNA), and the like. The mobile communication module 180 may receive an electromagnetic wave via the antenna 1, perform processing like filtering or amplification on the received electromagnetic wave, and transmit the electromagnetic wave to the modem processor for demodulation. The mobile communication module 180 may further amplify a signal modulated by the modem processor, and convert the signal into an electromagnetic wave for radiation through the antenna 1. In some embodiments, at least some functional modules in the mobile communication module 180 may be disposed in the processor 110. In some embodiments, at least some functional modules in the mobile communication module 180 may be disposed in a same device as at least some modules in the processor 110.

The wireless communication module 181 may provide a solution applied to the electronic device 10 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 181 may be one or more components integrating at least one communication processor module. The wireless communication module 181 receives an electromagnetic wave via the antenna 2, performs frequency modulation and filtering processing on an electromagnetic wave signal, and transmits a processed signal to the processor 110. The wireless communication module 181 may further receive a to-be-sent signal from the processor 110, perform frequency modulation and amplification on the signal, and convert the signal into an electromagnetic wave via the antenna 2 for radiation.

In some embodiments, the antenna 1 of the electronic device 10 is coupled to the mobile communication module 180, and the antenna 2 is coupled to the wireless communication module 181, so that the electronic device 10 may communicate with a network and another device by using a wireless communication technology.

The indicator 191 may be an indicator light, and may be configured to indicate a charging status and a power change, or may be configured to indicate a message, a missed call, a notification, and the like.

The SIM card interface 192 is configured to connect to a SIM card. The SIM card may be inserted into the SIM card interface 192 or removed from the SIM card interface 192, to implement contact with or separation from the electronic device 10. The electronic device 10 may support one or N SIM card interfaces, where N is a positive integer greater than 1. The electronic device 10 interacts with a network through the SIM card, to implement functions such as calling and data communication.

It may be understood that, a composition structure shown in FIG. 1 does not constitute a limitation on the electronic device. In addition to the components shown in FIG. 1, the electronic device may include more or fewer components than those shown in the figure, or a combination of some components, or splits from some components, or a different component layout.

The following describes the method provided in this application with reference to the accompanying drawings. Electronic devices in the following embodiments may have components shown in FIG. 1. Details are not described again.

It may be understood that, in this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with a same function or similar functions. The terms such as "first" and "second" do not limit a quantity and an execution sequence, and the terms such as "first" and "second" do not limit a definite difference. In this application, terms such as "example" or "for example" are used to represent giving an example, an illustration, or a description. Any embodiment or design scheme described with "example" or "for example" should not be explained as being more preferred or having more advantages than another embodiment or design scheme. A word like "example" or "for example" is used to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that in embodiments of this application, sequence numbers of processes do not mean a sequence of execution. The sequence of execution of the processes should be determined based on functions and internal logic of the processes, and should not constitute any limitation on an implementation process of this application.

It may be understood that, in this application, "when", "in a case in which", "if", and "it is assumed that" mean that corresponding processing is performed in an objective situation, are not intended to limit time, do not require a necessary determining action during implementation, and do not mean any other limitation.

In this application, unless otherwise specified, "greater than or equal to" may be replaced with "greater than" or "equal to"; and "less than or equal to" may be replaced with "less than" or "equal to". For example, that A is greater than or equal to B may be replaced with that A is greater than B, or A is equal to B. That A is less than or equal to B may be replaced with that A is less than B, or A is equal to B.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, the electronic device provided in this application may also correspondingly implement these features or functions. Details are not described herein.

It may be understood that, in this application, a same step, or steps or technical features that have a same function may be mutually referenced between different embodiments.

The method provided in this application is described below by using the electronic device 10 shown in FIG. 1 as an example. However, an execution entity is not limited in this application. For example, the electronic device 10 in the method provided below in this application may be a chip, a chip system, or a processor (for example, the processor 110) that supports the electronic device 10 in implementing the method, or may be a logical node, a logical module, or software that can implement all or some functions of the electronic device 10.

It may be understood that, in this application, the electronic device 10 may perform a part or all of steps in this application. These steps are merely examples. In this application, other steps or variations of various steps may alternatively be performed. In addition, the steps may be performed in an order different from an order shown in this application, and not all steps in this application are necessarily performed.

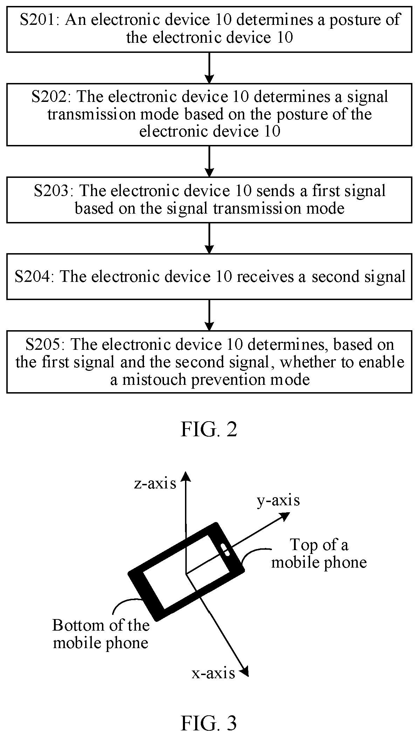

FIG. 2 shows a mistouch prevention method according to this application. The method may include the following steps.

S201: An electronic device 10 determines a posture of the electronic device 10.

In this application, at least one transmitter is deployed on each of a first side and a second side of the electronic device 10. The first side is different from the second side. The at least one transmitter deployed on the first side includes a first transmitter, and the at least one transmitter deployed on the second side includes a second transmitter. For example, the first transmitter is a transmitter 151 shown in FIG. 1, and the second transmitter is a transmitter 152 shown in FIG. 1. In addition to the transmitters, at least one receiver is further deployed on each of the first side and the second side of the electronic device 10. The at least one receiver deployed on the first side includes a first receiver, and the at least one receiver deployed on the second side includes a second receiver. For example, the first receiver is a receiver 153 shown in FIG. 1, and the second receiver is a receiver 154 shown in FIG. 1.

In this application, the first side is different from the second side. For example, the first side is the top of the electronic device 10, and the second side is the bottom of the electronic device 10. Alternatively, the first side is a left side of the electronic device 10, and the second side is a right side of the electronic device 10. Alternatively, the first side is the top of the electronic device 10, and the second side is a right side of the electronic device 10. It may be understood that there may be another positional relationship between the first side and the second side. This is not limited in this application.

In this application, the posture of the electronic device 10 includes that the first side of the electronic device 10 is facing upward, the first side of the electronic device 10 is facing downward, or the electronic device 10 is placed horizontally. "The first side of the electronic device 10 is facing upward" may be replaced with "the second side of the electronic device 10 is facing downward", and "the first side of the electronic device 10 is facing downward" may be replaced with "the second side of the electronic device 10 is facing upward".

In a possible design, the first side of the electronic device 10 is facing upward when an included angle between a first direction and a second direction is greater than or equal to a first threshold; the first side of the electronic device 10 is facing downward when an included angle between a first direction and a second direction is less than or equal to a second threshold; or the electronic device 10 is placed horizontally when an included angle between a first direction and a second direction is less than a first threshold and greater than a second threshold. The first direction is a direction from the second side of the electronic device 10 to the first side of the electronic device 10, and the second direction is a direction of gravity.

For example, descriptions are provided by using an example in which the first side is the top of the electronic device 10, the second side is the bottom of the electronic device 10, and the electronic device 10 is a mobile phone. As shown in FIG. 3, a three-dimensional coordinate system xyz is established by using a center point of the mobile phone as an origin. A positive direction of an x-axis is a direction from a left side of the mobile phone to a right side of the mobile phone, a positive direction of a y-axis (namely, the first direction) is a direction from the bottom of the mobile phone to the top of the mobile phone, and a positive direction of a z-axis is a direction from the back of the mobile phone to the front of the mobile phone. It may be understood that the three-dimensional coordinate system is not fixed, but rotates with a posture change of the mobile phone. The following separately describes the foregoing three postures in detail by using an example in which the included angle between the first direction and the second direction is θ (where θ∈[0°, 180⁰]).

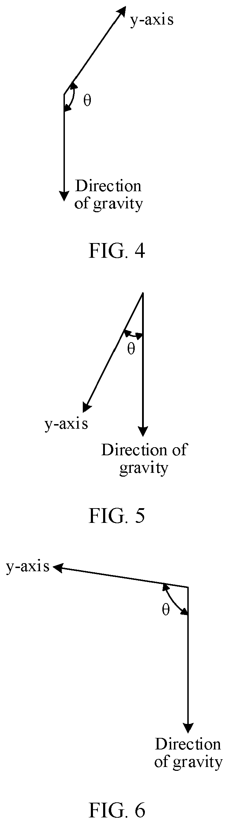

Example 1: As shown in FIG. 4, when θ is greater than or equal to the first threshold, the top of the electronic device 10 is facing upward (or the bottom of the electronic device 10 is facing downward). The first threshold may be an obtuse angle. For example, the first threshold is 135⁰. When θ∈ [135⁰, 180⁰], the posture of the electronic device 10 may be determined as the top facing upward.

Example 2: As shown in FIG. 5, when θ is less than or equal to the second threshold, the top of the electronic device 10 is facing downward (or the bottom of the electronic device 10 is facing upward). The second threshold may be an acute angle. For example, the second threshold is 45⁰. When θ∈ [0°, 45⁰], the posture of the electronic device 10 may be determined as the top facing downward.

Example 3: As shown in FIG. 6, when θ is less than the first threshold and greater than the second threshold, the electronic device 10 is placed horizontally. For example, the first threshold is 135⁰, and the second threshold is 45⁰. When θ∈ [45⁰, 135⁰], the posture of the electronic device 10 may be determined as being placed horizontally.

In a possible implementation, the electronic device 10 may determine the posture of the electronic device 10 by using an acceleration sensor. For example, the acceleration sensor may obtain the included angle between the first direction and the second direction, and the electronic device 10 may determine the posture of the electronic device 10 based on the included angle.

It may be understood that, in the foregoing examples, when the included angle between the first direction and the second direction is equal to the first threshold, the electronic device 10 determines that the first side is facing upward; or when the included angle between the first direction and the second direction is equal to the second threshold, the electronic device 10 determines that the first side is facing downward. In specific application, when the included angle between the first direction and the second direction is equal to the first threshold, the electronic device 10 may alternatively determine that the posture of the electronic device 10 is horizontal placement. Similarly, when the included angle between the first direction and the second direction is equal to the second threshold, the electronic device 10 may alternatively determine that the posture of the electronic device 10 is horizontal placement.

S202: The electronic device 10 determines a signal transmission mode based on the posture of the electronic device 10.

In this application, the signal transmission mode indicates a transmitter deployed on which side is used to send a signal. For example, the signal transmission mode includes that the electronic device 10 sends a signal through the transmitter (for example, the first transmitter) deployed on the first side, sends a signal through the transmitter (for example, the second transmitter) deployed on the second side, or sends signals through the transmitter (for example, the first transmitter) deployed on the first side and the transmitter (for example, the second transmitter) deployed on the second side.

It may be understood that "the electronic device 10 sends a signal through the transmitter deployed on the first side" means "the electronic device 10 sends a signal through any one or more transmitters deployed on the first side". Similarly, "the electronic device 10 sends a signal through the transmitter deployed on the second side" means "the electronic device 10 sends a signal through any one or more transmitters deployed on the second side", and "the electronic device 10 sends signals through the transmitter deployed on the first side and the transmitter deployed on the second side" means "the electronic device 10 sends signals through any one or more transmitters deployed on the first side and any one or more transmitters deployed on the second side". For ease of description, in the following embodiments of this application, descriptions are provided by using an example in which the signal transmission mode includes that the electronic device 10 sends the signal through the first transmitter, sends the signal through the second transmitter, or sends the signals through the first transmitter and the second transmitter.

It may be understood that mistouches are prone to occur when the electronic device 10 is blocked. Therefore, whether the electronic device 10 is blocked may be detected, to determine whether an operation detected by the electronic device 10 is a mistouch. In specific application, the electronic device 10 may determine, based on a sent signal and a received reflected signal of the signal, whether the electronic device 10 is blocked. For example, if signal strength of the reflected signal is strong, the electronic device 10 may determine that the electronic device 10 is blocked; or if signal strength of the reflected signal is weak, the electronic device 10 may determine that the electronic device 10 is not blocked. When the electronic device 10 is in a semi-enclosed environment (for example, an environment such as a pocket or a backpack), which side's transmitter the electronic device 10 uses to send a signal affects accuracy of a detection result. For example, the electronic device 10 is in a pocket. If the electronic device 10 sends a signal through a transmitter at the bottom of the pocket, because the transmitter is blocked by the pocket, a reflected signal of the signal is strong, and the electronic device 10 determines that the electronic device 10 is blocked; or if the electronic device 10 sends a signal through a transmitter at the top of the pocket, because the transmitter may not be completely blocked by the pocket or may not be blocked by the pocket, a reflected signal of the signal is weak, and the electronic device 10 determines that the electronic device 10 is not blocked, resulting in missing detection. Therefore, to improve accuracy of the detection result of the electronic device 10, the signal transmission mode of the electronic device 10 may be designed based on the posture of the electronic device 10.

In a possible implementation, when the first side of the electronic device 10 is facing upward, the signal transmission mode is sending the signal through the second transmitter; when the first side of the electronic device 10 is facing downward, the signal transmission mode is sending the signal through the first transmitter; or when the electronic device 10 is placed horizontally, the signal transmission mode is sending the signal through the first transmitter and/or the second transmitter.

Descriptions are provided by using an example in which the electronic device 10 is in a pocket, the first side is the top of the electronic device 10, and the second side is the bottom of the electronic device 10. When the first side of the electronic device 10 is facing upward, it indicates that the top of the electronic device 10 is facing upward, the first transmitter at the top may not be blocked or may not be completely blocked, and the second transmitter at the bottom is blocked. Therefore, the electronic device 10 may transmit the signal through the second transmitter, to detect whether the electronic device 10 is blocked. When the first side of the electronic device 10 is facing downward, it indicates that the top of the electronic device 10 is facing downward, the second transmitter at the bottom may not be blocked or may not be completely blocked, and the first transmitter at the top is blocked. Therefore, the electronic device 10 may transmit the signal through the first transmitter, to detect whether the electronic device 10 is blocked. When the electronic device 10 is placed horizontally, both the top and the bottom of the electronic device 10 may be blocked. Therefore, the electronic device 10 may send the signal through the first transmitter and/or send the signal through the second transmitter. Certainly, if power consumption of the electronic device 10 is not considered, the electronic device 10 may not determine the signal transmission mode based on the posture, but send the signals through the first transmitter and the second transmitter each time. This is not limited.

S203: The electronic device 10 sends a first signal based on the signal transmission mode.

It may be understood that, if the signal transmission mode is sending the signal through the second transmitter, the electronic device 10 sends the first signal through the second transmitter; if the signal transmission mode is sending the signal through the first transmitter, the electronic device 10 sends the first signal through the first transmitter; or if the signal transmission mode is sending the signal through the first transmitter and/or the second transmitter, the electronic device 10 sends the first signal through the first transmitter, the electronic device 10 sends the first signal through the second transmitter, or the electronic device 10 sends first signals through the first transmitter and the second transmitter.

In a possible implementation, the electronic device 10 may determine transmit power of the first signal, and send the first signal at the transmit power. For example, the electronic device 10 may determine ambient noise of the electronic device 10, and determine the transmit power of the first signal based on the noise. Subsequently, the electronic device 10 sends the first signal at the determined transmit power.

It may be understood that when the ambient noise of the electronic device 10 is high, the electronic device 10 may increase the transmit power of the first signal, to increase a success rate of detecting a reflected signal or a direct signal of the first signal. When the ambient noise of the electronic device 10 is low, the electronic device 10 may decrease the transmit power of the first signal, to reduce power consumption of the electronic device 10. For example, the electronic device 10 may sense noise by using a microphone and/or the receiver (for example, the receiver 153 or the receiver 154 shown in FIG. 1) deployed on the electronic device 10, to determine the transmit power of the first signal.

In a possible implementation, the electronic device 10 determines a motion state of the electronic device 10, and determines a period of the first signal based on the motion state.

Optionally, when the electronic device 10 is in a moving state, the electronic device 10 may shorten the period of the first signal or increase a frequency of the first signal, to increase the success rate of detecting the direct signal and the reflected signal of the first signal; or when the electronic device 10 is in a static state, the electronic device 10 may prolong the period of the first signal or decrease a frequency of the first signal, to reduce power consumption of the electronic device 10. The motion state of the electronic device 10 may be obtained by using an acceleration sensor and/or a gyro sensor.

For example, when the electronic device 10 is in the static state, the period of the first signal is 500 ms, and after it is sensed that the electronic device 10 is in the moving state, the period of the first signal may be changed to 300 ms. A shortening amplitude of the period of the first signal is related to a change speed of the motion state of the electronic device 10 (for example, a motion speed or an acceleration of the electronic device 10).

S204: The electronic device 10 receives a second signal.

In a possible implementation, the electronic device 10 receives the second signal through any one or more receivers deployed on the first side and/or receives the second signal through any one or more receivers deployed on the second side. For ease of description, in the following embodiments of this application, descriptions are provided by using an example in which the electronic device 10 receives the second signal through the first receiver and/or receives the second signal through the second receiver.

In this application, the second signal includes the reflected signal of the first signal. Optionally, the second signal further includes the direct signal of the first signal. The direct signal of the first signal is a signal sent by the transmitter and received by the receiver without being reflected, that is, the direct signal of the first signal is a signal transmitted from the transmitter to the receiver through line-of-sight propagation. The reflected signal of the first signal is a signal received by the receiver after the first signal sent by the transmitter is reflected at least once. For example, the first transmitter sends a signal, and the first receiver receives a signal. If the first signal sent by the first transmitter is received by the first receiver without being reflected, a signal received by the first receiver may be referred to as the direct signal of the first signal. If the first signal sent by the first transmitter is received by the first receiver after being reflected by an obstruction, a signal received by the first receiver is referred to as the reflected signal of the first signal.

In a possible implementation, to increase a success rate of detecting the second signal by the electronic device 10, the electronic device 10 may receive the second signal through a receiver on a same side as a transmitter that sends the first signal. For example, if the electronic device 10 sends the first signal through the first transmitter, the electronic device 10 receives the second signal through the first receiver; if the electronic device 10 sends the first signal through the second transmitter, the electronic device 10 receives the second signal through the second receiver; or if the electronic device 10 sends a signal through the first transmitter and/or sends a signal through the second transmitter, the electronic device 10 receives the second signal through the first receiver and/or receives the second signal through the second receiver.

It may be understood that, in addition to a receiver located on a same side as a transmitter that sends the first signal, the electronic device 10 may further receive the second signal through a receiver on a different side from the transmitter that sends the first signal, so that the electronic device 10 determines, with reference to second signals received by the receivers on the two sides, whether to enable a mistouch prevention mode, thereby improving accuracy of a detection result.

S205: The electronic device 10 determines, based on the first signal and the second signal, whether to enable the mistouch prevention mode.

In a possible implementation, the electronic device 10 determines transmission status information of the first signal based on the first signal and the second signal, and determines, based on the transmission status information of the first signal, whether to enable the mistouch prevention mode.

In this application, the transmission status information of the first signal includes at least one of a first delay or a first percentage. The first delay is a delay between the first signal and the second signal. The first percentage is a percentage of signal strength of the second signal to signal strength of the first signal.

Optionally, the transmission status information of the first signal further includes a quantity of second signals received in different directions. As described above, the second signal includes the direct signal of the first signal and the reflected signal of the first signal. The reflected signal of the first signal includes a signal obtained after the first signal is reflected at least once. Therefore, second signals received by the electronic device 10 are received in different directions. The "second signals received in different directions" herein may be all second signals, that can be detected by the electronic device 10, received in different directions (or reflected signals of the first signal), or second signals, that are detected by the electronic device 10 within a time period (for example, within a time period starting from sending the first signal, or within a time period starting from receiving a 1^{st} second signal), received in different directions (or reflected signals of the first signal).

It may be understood that the first delay may be a delay between the first signal and a specific second signal or each of the plurality of second signals received in different directions, or an average value, a weighted average value, or the like of delays between the first signal and the plurality of second signals. This is not limited. Similarly, the first percentage may be a percentage of signal strength of a specific second signal or each of the plurality of second signals to the signal strength of the first signal, or a percentage of an average value or a weighted average value of signal strength of the plurality of second signals in the signal strength of the first signal. This is not limited. For example, the specific second signal may be a second signal earliest received by the electronic device 10 or a second signal latest received by the electronic device 10. In addition, the first percentage may alternatively be replaced with another parameter related to the signal strength of the first signal and the signal strength of the second signal. For example, the first percentage may be replaced with a percentage of the signal strength of the first signal in the signal strength of the second signal, a difference between the signal strength of the first signal and the signal strength of the second signal, or a difference between the signal strength of the second signal and the signal strength of the first signal. This is not limited. In the following embodiments of this application, descriptions are provided by using an example in which the first percentage is the percentage of the signal strength of the second signal in the signal strength of the first signal.

In a possible implementation, the electronic device 10 may obtain the transmission status information of the first signal based on a cross-correlation between the first signal and the second signal. The cross-correlation between the first signal and the second signal may be understood as similarity between the two signals. For example, *x*(*t*) represents the first signal, and *y*(*t*) represents the second signal. The cross-correlation (*R_{x,y}*(*t*)) between the first signal and the second signal may satisfy Formula (1). *x*(*t*) may represent a relationship between an amplitude of the first signal and time, *y*(*t*) may represent a relationship between an amplitude of the second signal and time, and *τ* represents the delay between the first signal and the second signal. ${R}_{x , y} \left(t\right) = {\int }_{- ∞}^{∞} x \left(t\right) y \left(t+τ\right) dτ$ (1)

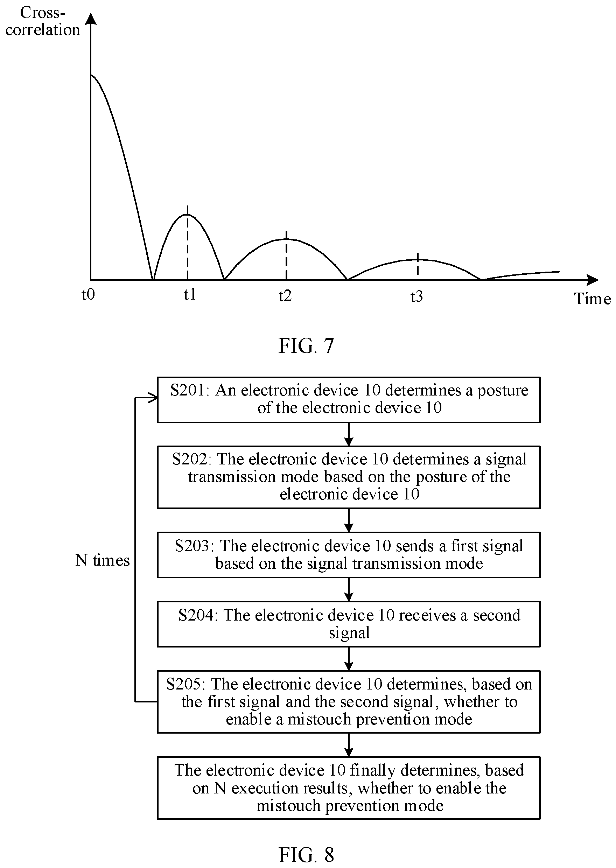

FIG. 7 is a diagram of a cross-correlation between a first signal and a second signal. FIG. 7 shows a direct signal of the first signal and three reflected signals of the first signal. A peak (which may be understood as a main lobe of the cross-correlation) corresponding to a moment t0 corresponds to the direct signal of the first signal, and peaks (which may be understood as side lobes of the cross-correlation) corresponding to moments t1, t2, and t3 respectively correspond to the reflected signals of the first signal that are received in different directions. It can be learned from FIG. 7 that a value of a cross-correlation between the direct signal of the first signal and the first signal is the largest. This is because the direct signal of the first signal has the shortest transmission time and minimum attenuation. As the delay increases, for example, from the moment t0 to the moment t3, peak values corresponding to different moments become smaller. This is because as the delay increases, a transmission path of the first signal increases, and attenuation of the first signal also increases. Therefore, a reflected signal that arrives at a receiver later has a smaller correlation with the first signal. The peak corresponding to the moment t1 corresponds to a reflected signal with the lowest transmission delay, and the rest may be deduced by analogy.

It may be understood that the electronic device 10 may determine the first delay based on at least one of t0, t1, t2, or t3 and a moment at which the first signal is sent. The electronic device 10 may determine the first percentage based on the signal strength of the first signal and at least one of signal strength corresponding to the moment t0, signal strength corresponding to the moment t1, signal strength corresponding to the moment t2, or signal strength corresponding to the moment t3. In FIG. 7, the electronic device 10 may determine that the quantity of second signals received in different directions is 3.

It may be understood that a manner in which the electronic device 10 determines, based on the first signal and the second signal, whether to enable the mistouch prevention mode is related to content included in the transmission status information of the first signal. The following uses Case 1 to Case 5 as examples for description.

Case 1: The transmission status information of the first signal includes the first delay.

In a possible implementation, the electronic device 10 enables the mistouch prevention mode when the first delay is less than or equal to a first duration; or the electronic device 10 does not enable the mistouch prevention mode when the first delay is greater than a first duration.

It may be understood that, that the first delay is less than or equal to the first duration indicates that the first signal is received by the electronic device 10 after being transmitted over a short distance. For example, the electronic device 10 is in a pocket or a backpack, and the first signal is received by the electronic device 10 after being reflected by the pocket or the backpack within the first duration. Therefore, when the first delay is less than or equal to the first duration, the electronic device 10 may be blocked, and the electronic device 10 may enable the mistouch prevention mode. That the first delay is greater than the first duration indicates that the first signal is received by the electronic device 10 after being transmitted over a long distance. Therefore, the electronic device 10 may not be blocked, and the electronic device 10 may not enable the mistouch prevention mode.

For example, the first delay is a delay between the second signal corresponding to the moment t3 shown in FIG. 7 and the first signal, and the first duration is 2 seconds (s). The electronic device 10 enables the mistouch prevention mode if the first delay is 1.5s. The electronic device 10 does not enable the mistouch prevention mode if the first delay is 3s.

It should be understood that, when the first delay is equal to the first duration, the electronic device 10 may alternatively determine to enable the mistouch prevention mode. This is not limited.

Case 2: The transmission status information of the first signal includes the first delay and the quantity (referred to as a first quantity below) of second signals received in different directions.

In a possible implementation, the electronic device 10 enables the mistouch prevention mode when the first delay is less than or equal to a first duration and the first quantity is greater than or equal to a third threshold; or the electronic device 10 does not enable the mistouch prevention mode when the first delay is greater than a first duration or the first quantity is less than a third threshold.

It may be understood that, that the first delay is less than or equal to the first duration and the first quantity is greater than or equal to the third threshold indicates that the first signal is received by the electronic device 10 after being transmitted over a short distance, and the first signal is reflected multiple times during transmission over the short distance. For example, the electronic device 10 is in a pocket or a backpack, and the first signal is received by the electronic device 10 after being reflected by the pocket or the backpack multiple times within the first duration. Therefore, when the first delay is less than or equal to the first duration and the first quantity is greater than or equal to the third threshold, the electronic device 10 may be blocked, and the electronic device 10 may enable the mistouch prevention mode. That the first delay is greater than the first duration indicates that the first signal is received by the electronic device 10 after being transmitted over a long distance. Therefore, the electronic device 10 may not be blocked, and the electronic device 10 may not enable the mistouch prevention mode. That the first quantity is less than the third threshold indicates that the first signal is not frequently reflected. Therefore, the electronic device 10 may not be blocked, and the electronic device 10 may not enable the mistouch prevention mode.

For example, the first delay is a delay between the second signal corresponding to the moment t3 shown in FIG. 7 and the first signal, the first duration is 2s, and the third threshold is 2. The quantity of reflected signals of the first signal shown in FIG. 7 is 3, that is, the first quantity is 3. If the first delay is 1.5s, the electronic device 10 enables the mistouch prevention mode.

It should be understood that, the electronic device 10 may alternatively not enable the mistouch prevention mode when the first delay is equal to the first duration and/or the first quantity is equal to the third threshold. This is not limited.

Case 3: The transmission status information of the first signal includes the first percentage.

In a possible implementation, the electronic device 10 enables the mistouch prevention mode when the first percentage is greater than or equal to a fourth threshold; or the electronic device 10 does not enable the mistouch prevention mode when the first percentage is less than a fourth threshold.

It may be understood that, that the first percentage is greater than or equal to the fourth threshold indicates that the first signal is slightly attenuated during transmission. For example, the electronic device 10 is in a pocket or a backpack. The first signal is reflected by the pocket or the backpack after being transmitted over a short distance, and then is received by the electronic device 10. Therefore, signal strength of the second signal received by the electronic device 10 is not significantly attenuated compared with the first signal. Therefore, when the first percentage is greater than or equal to the fourth threshold, the electronic device 10 may be blocked, and the electronic device 10 may enable the mistouch prevention mode. That the first percentage is less than the fourth threshold indicates that the first signal is greatly attenuated during transmission. Therefore, the electronic device 10 may not be blocked, and the electronic device 10 does not enable the mistouch prevention mode.

For example, the first percentage is a percentage of the signal strength of the second signal corresponding to the moment t3 shown in FIG. 7 in the signal strength of the first signal, and the fourth threshold is 40%. If the first percentage is 50%, the electronic device 10 enables mistouch prevention; or if the first percentage is 10%, the electronic device 10 does not enable mistouch prevention.

It should be understood that, the electronic device 10 may alternatively not enable the mistouch prevention mode when the first percentage is equal to the fourth threshold. This is not limited.

Case 4: The transmission status information of the first signal includes the first percentage and a first quantity.

In a possible implementation, the electronic device 10 enables the mistouch prevention mode when the first percentage is greater than or equal to a fourth threshold and the first quantity is greater than or equal to a fifth threshold; or the electronic device 10 does not enable the mistouch prevention mode when the first percentage is less than a fourth threshold or the first quantity is less than a fifth threshold.

It may be understood that, that the first percentage is greater than or equal to the fourth threshold and the first quantity is greater than or equal to the fifth threshold indicates that the first signal is slightly attenuated during transmission, and the first signal is reflected multiple times during transmission. For example, the electronic device is in a pocket or a backpack, the first signal is received by the electronic device 10 after being transmitted over a short distance, and is reflected multiple times in the pocket or the backpack over the short transmission distance. Therefore, signal strength of the received second signal is not significantly attenuated compared with the first signal. Therefore, when the first percentage is greater than or equal to the fourth threshold and the first quantity is greater than or equal to the fifth threshold, the electronic device 10 may be blocked, and the electronic device 10 enables the mistouch prevention mode. That the first percentage is less than the fourth threshold indicates that the first signal is greatly attenuated during transmission. Therefore, the electronic device 10 may not be blocked, and the electronic device 10 does not enable the mistouch prevention mode. That the first quantity is less than the fifth threshold indicates that the first signal is not frequently reflected. Therefore, the electronic device 10 may not be blocked, and the electronic device 10 may not enable the mistouch prevention mode.

For example, the first percentage is a percentage of the signal strength of the second signal corresponding to the moment t3 shown in FIG. 7 in the signal strength of the first signal, the fourth threshold is 30%, and the fifth threshold is 4. The quantity of reflected signals of the first signal shown in FIG. 7 is 3, that is, the first quantity is 3. If the first percentage is 40%, the electronic device 10 enables the mistouch prevention mode.

For example, the first percentage is a percentage of the signal strength of the second signal corresponding to the moment t1 shown in FIG. 7 in the signal strength of the first signal, the fourth threshold is 30%, and the fifth threshold is 3. The quantity of reflected signals of the first signal shown in FIG. 7 is 3, that is, the first quantity is 3. If the first percentage is 20%, the electronic device 10 does not enable the mistouch prevention mode.

It should be understood that, the electronic device 10 may alternatively not enable the mistouch prevention mode when the first percentage is equal to the fourth threshold and/or the first quantity is equal to the fifth threshold. This is not limited.

Case 5: The transmission status information of the first signal includes the first delay and the first percentage.

In a possible implementation, the electronic device 10 enables the mistouch prevention mode when the first delay is less than or equal to a second duration and the first percentage is greater than or equal to a sixth threshold; or the electronic device 10 does not enable the mistouch prevention mode when the first delay is greater than a second duration or the first percentage is less than a sixth threshold.

It may be understood that, that the first delay is less than or equal to the second duration and the first percentage is greater than or equal to the sixth threshold indicates that the first signal is received by the electronic device 10 after being transmitted over a short distance, and the first signal is slightly attenuated during transmission. Therefore, the electronic device 10 may be blocked, and the electronic device 10 enables the mistouch prevention mode. That the first delay is greater than the second duration indicates that the first signal is received by the electronic device 10 after being transmitted over a long distance. Therefore, the electronic device 10 may not be blocked, and the electronic device 10 does not enable the mistouch prevention mode. That the first percentage is less than the sixth threshold indicates that the first signal is slightly attenuated during transmission. Therefore, the electronic device 10 may not be blocked, and the electronic device 10 does not enable the mistouch prevention mode.

It may be understood that the electronic device 10 may further determine, with reference to the first quantity, whether to enable the mistouch prevention mode. For example, the electronic device 10 enables the mistouch prevention mode when the first delay is less than or equal to the second duration, the first percentage is greater than or equal to the sixth threshold, and the first quantity is greater than or equal to a seventh threshold; or the electronic device 10 does not enable the mistouch prevention mode when the first delay is greater than the second duration, the first percentage is less than the sixth threshold, or the first quantity is less than a seventh threshold.

It should be understood that, the electronic device 10 may alternatively not enable the mistouch prevention mode when the first delay is equal to the second duration, the first percentage is equal to the sixth threshold, and/or the first quantity is equal to the seventh threshold. This is not limited.

It may be understood that, in addition to the transmission status information of the first signal, the electronic device 10 may further determine, based on the signal strength of the first signal and the signal strength of the second signal, whether to enable the mistouch prevention mode. For example, the electronic device 10 enables the mistouch prevention mode when the signal strength of the second signal is greater than or equal to first strength. The first strength is obtained based on the signal strength of the first signal. For example, the first strength is a product of the signal strength of the first signal and a second percentage. The second percentage is, for example, 80% or 85%.

It may be understood that, when the electronic device 10 is blocked, for example, the electronic device 10 is in a pocket or a backpack, if a reflection path through which a reflected signal with the lowest delay in the one or more second signals passes is very short, that is, a transmission distance is short, a transmission delay is also very low, that is, a peak corresponding to the reflected signal appears to overlap a peak corresponding to the direct signal in a cross-correlation image, resulting in a large (for example, greater than the first strength) peak value of a 1^{st} peak in the cross-correlation image. In this case, the electronic device 10 may determine that the electronic device 10 is blocked, to determine to enable the mistouch prevention mode.

It may be understood that, when the electronic device 10 receives the second signal through a receiver on a different side from a transmitter that sends the first signal, the electronic device 10 may determine, with reference to the second signal received by the first receiver and the second signal received by the second receiver, whether to enable the mistouch prevention mode. For example, descriptions are provided by using an example in which the first transmitter deployed at the bottom of the electronic device 10 transmits the first signal, and the electronic device 10 determines, based on the signal strength, whether to enable the mistouch prevention mode. Because the first receiver and the first transmitter are on the same side, and are both located at the bottom of the electronic device 10, the first receiver is closer to the first transmitter than the second receiver. When the electronic device 10 is in a pocket, a ratio of signal strength of a direct signal in the second signal received by the first receiver to signal strength of a direct signal in the second signal received by the second receiver is a first ratio. When the electronic device 10 is not in a pocket, a ratio of signal strength of a direct signal in the second signal received by the first receiver to signal strength of a direct signal in the second signal received by the second receiver is a second ratio. It should be understood that, if the first ratio is greater than the second ratio, whether the electronic device 10 enables the mistouch prevention mode may be determined based on a condition whether the ratio of the signal strength of the direct signal in the second signal received by the first receiver to the signal strength of the direct signal in the second signal received by the second receiver is greater than or equal to the first threshold. According to the method, the electronic device 10 may determine, with reference to the second signals received by the receivers on the two sides, whether to enable the mistouch prevention mode, thereby improving accuracy of a detection result.

In a possible implementation, when the first side of the electronic device 10 is facing downward, the signal transmission mode is sending the signal through the first transmitter. When determining, based on the first signal and the second signal, whether to enable the mistouch prevention mode, the electronic device 10 may send a third signal through the second transmitter when it is determined, based on the first signal and the second signal, not to enable the mistouch prevention mode. The electronic device 10 may receive a fourth signal, where the fourth signal is a reflected signal of the third signal. The electronic device 10 may further determine, based on the first signal, the second signal, the third signal, and the fourth signal, whether to enable the mistouch prevention mode.

In other words, when the first side of the electronic device 10 is facing downward, the signal transmission mode may be sending the signal through the first transmitter. The first signal is a signal sent by the first transmitter, and the second signal is a reflected signal of the first signal. When determining, based on the first signal and the second signal, whether to enable the mistouch prevention mode, the electronic device 10 may first perform determining based on a signal sent by the first transmitter and a received signal.

Specifically, the electronic device 10 may determine the transmission status information of the first signal based on the first signal and the second signal, and determines, based on the transmission status information of the first signal, whether to enable the mistouch prevention mode. Same as the foregoing descriptions, the transmission status information of the first signal includes at least one of the first delay or the first percentage.

It should be noted that, a specific implementation in which the electronic device 10 determines, based on the transmission status information of the first signal, whether to enable the mistouch prevention mode is similar to that in the foregoing embodiment, and details are not described herein again.

Then, if the electronic device 10 determines, based on the signal sent by the first transmitter and the received signal, not to enable the mistouch prevention mode, the electronic device 10 may send a signal through the second transmitter. Finally, whether to enable the mistouch prevention mode is determined comprehensively based on the signal sent by the first transmitter and the received signal, and the signal sent by the second transmitter and a received signal.

In other words, the electronic device 10 obtains the third signal and the fourth signal when determining, based on the signal sent by the first transmitter and the received signal, not to enable the mistouch prevention mode, where the third signal is a signal sent by the second transmitter, and the fourth signal is a reflected signal of the third signal. The electronic device 10 may comprehensively determine, based on the first signal, the second signal, the third signal, and the fourth signal, whether to enable the mistouch prevention mode.

In this way, when determining, based on the first signal and the second signal, to enable the mistouch prevention mode, the electronic device 10 does not need to switch to the second transmitter for signal sending and receiving. This can reduce a detection delay and power consumption of the electronic device 10. When determining, based on the first signal and the second signal, not to enable the mistouch prevention mode, the electronic device 10 may further perform comprehensive determining with reference to a signal sent by the second transmitter and a received signal that are on the other side. In this way, a more accurate result can be obtained. Therefore, the foregoing method can effectively prevent the electronic device 10 from performing unintended operations, thereby improving user experience.

In a possible implementation, when the first side of the electronic device 10 is facing upward, the signal transmission mode is sending the signal through the second transmitter. When determining, based on the first signal and the second signal, whether to enable the mistouch prevention mode, the electronic device 10 may send a third signal through the first transmitter when it is determined, based on the first signal and the second signal, not to enable the mistouch prevention mode. The electronic device 10 may receive a fourth signal, where the fourth signal includes a reflected signal of the third signal. The electronic device 10 may further determine, based on the first signal, the second signal, the third signal, and the fourth signal, whether to enable the mistouch prevention mode.

In other words, when the first side of the electronic device 10 is facing upward, the signal transmission mode is sending the signal through the second transmitter. The first signal is a signal sent by the second transmitter, and the second signal is a reflected signal of the first signal. When determining, based on the first signal and the second signal, whether to enable the mistouch prevention mode, the electronic device 10 may first perform determining based on a signal sent by the second transmitter and a received signal.

Specifically, the electronic device 10 may determine the transmission status information of the first signal based on the first signal and the second signal, and determines, based on the transmission status information of the first signal, whether to enable the mistouch prevention mode. Same as the foregoing descriptions, the transmission status information of the first signal includes at least one of the first delay or the first percentage.

It should be noted that, a specific implementation in which the electronic device 10 determines, based on the transmission status information of the first signal, whether to enable the mistouch prevention mode is similar to that in the foregoing embodiment, and details are not described herein again.

Then, if the electronic device 10 determines, based on the signal sent by the second transmitter and the received signal, not to enable the mistouch prevention mode, the electronic device 10 may send a signal through the first transmitter. Finally, whether to enable the mistouch prevention mode is determined comprehensively based on the signal sent by the first transmitter and the received signal, and the signal sent by the second transmitter and a received signal.

In other words, the electronic device 10 obtains the third signal and the fourth signal when determining, based on the signal sent by the second transmitter and the received signal, not to enable the mistouch prevention mode, where the third signal is a signal sent by the first transmitter, and the fourth signal is a reflected signal of the third signal. The electronic device 10 may comprehensively determine, based on the first signal, the second signal, the third signal, and the fourth signal, whether to enable the mistouch prevention mode.

In this way, when determining, based on the first signal and the second signal, to enable the mistouch prevention mode, the electronic device 10 does not need to switch to the first transmitter for signal sending and receiving. This can reduce a detection delay and power consumption of the electronic device 10. When determining, based on the first signal and the second signal, not to enable the mistouch prevention mode, the electronic device 10 may further perform comprehensive determining with reference to a signal sent by the first transmitter and a received signal that are on the other side. In this way, a more accurate result can be obtained. Therefore, the foregoing method can effectively prevent the electronic device 10 from performing unintended operations, thereby improving user experience.

In some embodiments of this application, when determining, based on the first signal, the second signal, the third signal, and the fourth signal, whether to enable the mistouch prevention mode, the electronic device 10 may determine transmission status information of the first signal based on the first signal and the second signal, and determine transmission status information of the third signal based on the third signal and the fourth signal. Then, the electronic device 10 may determine, based on the transmission status information of the first signal and the transmission status information of the third signal, whether to enable the mistouch prevention mode.

In this application, the transmission status information of the third signal includes at least one of a second delay or a second percentage. The second delay is a delay between the third signal and the fourth signal. The second percentage is a percentage of signal strength of the fourth signal to signal strength of the third signal.

Specifically, the electronic device 10 may determine, based on at least one of the second delay or the second percentage, and/or at least one of the first delay or the first percentage, whether to enable the mistouch prevention mode.

For example, the transmission status information of the first signal includes the first delay. The transmission status information of the third signal includes the second delay.

In a possible implementation, the electronic device 10 enables the mistouch prevention mode when the first delay is less than or equal to the first duration and/or the second delay is less than or equal to the second duration; or the electronic device 10 does not enable the mistouch prevention mode when the first delay is greater than the first duration and/or the second delay is greater than the second duration. It should be noted that values corresponding to the first duration and the second duration are not specifically limited in this embodiment of this application.

It should be noted that a specific implementation corresponding to determining, based on the transmission status information of the first signal and the transmission status information of the third signal, whether to enable the mistouch prevention mode is not limited in this embodiment of this application.

In this way, in this embodiment of this application, the electronic device 10 may comprehensively determine, based on the transmission status information of the first signal and the transmission status information of the third signal, whether to enable the mistouch prevention mode, thereby improving accuracy of determining whether to enable the mistouch prevention mode, and therefore improving user experience.

In a possible implementation, when determining, based on the first signal, the second signal, the third signal, and the fourth signal, whether to enable the mistouch prevention mode, the electronic device 10 enables the mistouch prevention mode when the signal strength of the second signal is greater than or equal to first strength and/or the signal strength of the fourth signal is greater than or equal to second strength. The first strength is obtained based on the signal strength of the first signal, and the second strength is obtained based on the signal strength of the third signal. In other words, the second strength may be obtained based on the signal strength of the third signal, to determine, based on the signal strength of the third signal and the signal strength of the fourth signal, whether to enable the mistouch prevention mode.

For example, when the signal strength of the second signal is less than the first strength and the signal strength of the fourth signal is greater than or equal to the second strength, the mistouch prevention mode is enabled.

According to the foregoing possible implementation, in some cases, for example, when a 1^{st} reflected signal of the first signal overlaps a direct signal, the signal strength of the second signal is strong, for example, may be greater than or equal to 80% of the signal strength of the first signal. Therefore, the electronic device 10 may directly determine that the electronic device 10 is blocked. Similarly, when a 1^{st} reflected signal of the third signal overlaps a direct signal, the signal strength of the fourth signal is strong, for example, may be greater than or equal to 80% of the signal strength of the third signal. Therefore, the electronic device 10 may also directly determine that the electronic device 10 is blocked. Therefore, by determining, with reference to the signal strength of the first signal and/or the signal strength of the third signal, that the electronic device 10 is blocked, accuracy of determining whether to enable the mistouch prevention mode can be improved, and an operation of the electronic device 10 can be simplified.

In some embodiments of this application, when determining, based on the first signal and the second signal, whether to enable the mistouch prevention mode, the electronic device 10 may determine, based on the transmission status information of the first signal, to enable the mistouch prevention mode.

For example, the transmission status information of the first signal includes the first delay. The electronic device 10 may enable the mistouch prevention mode when the first delay is less than or equal to the first duration.

It should be noted that, a specific implementation in which the electronic device determines, based on the first signal and the second signal, to enable the mistouch prevention mode is similar to that in the foregoing embodiment, and details are not described herein again.

It may be understood that, in specific application, the electronic device 10 may further determine, with reference to other information, whether to enable the mistouch prevention mode, to further improve accuracy of a detection result. For example, the electronic device 10 may determine, with reference to information sensed by a sensor, whether the electronic device 10 is blocked, and enables the mistouch prevention mode if the electronic device 10 is blocked. The sensor may include at least one of the following: an optical proximity sensor, an ambient light sensor, an infrared sensor, a capacitive sensor, or the like.

It may be understood that, after determining to enable the mistouch prevention mode, the electronic device 10 may not respond to a recognized instruction or the electronic device 10 may lock a screen, to prevent user mistouches. For example, the electronic device 10 may perform a first operation. The first operation includes at least one of the following: a screen lock operation, dimming a screen of the electronic device 10, stopping identifying a physiological feature of the user, stopping identifying a gesture of the user, stopping screen unlocking, or stopping responding to an operation of the user. The physiological feature of the user may include at least one of the following: a fingerprint of the user, a facial feature of the user, an iris of the user, or the like.

According to the method shown in FIG. 2, the electronic device 10 may use, for different postures of the electronic device 10, different signal transmission modes to send the first signal, and determine, based on the first signal and the received second signal, whether to enable the mistouch prevention mode. Because mistouches are prone to occur when the electronic device 10 is blocked, whether to enable the mistouch prevention mode may be determined by detecting whether the electronic device 10 is blocked. When the electronic device 10 is partially blocked (for example, the electronic device 10 is in a semi-enclosed environment such as a pocket or a backpack), whether the electronic device 10 is blocked can be more accurately detected by sending a signal through a transmitter of a blocked part. Therefore, different signal transmission modes are designed for different postures of the electronic device 10, so that a more accurate detection result can be obtained. Therefore, the foregoing method can effectively prevent the electronic device 10 from performing unintended operations, thereby improving user experience.

Optionally, in a possible implementation, to improve accuracy of the detection result, the electronic device 10 may perform S201 to S204 multiple times, and determine, based on first signals and second signals that are obtained by performing the foregoing steps the multiple times, whether to enable the mistouch prevention mode. Specifically, after performing S201 to S204 each time, the electronic device 10 may determine, based on a first signal and a second signal that are obtained this time, whether to enable the mistouch prevention mode. Subsequently, the electronic device 10 may finally determine, based on a plurality of determining results, whether to enable the mistouch prevention mode, to avoid enabling the mistouch prevention mode due to accidental blocking once, or avoid enabling the mistouch prevention mode due to short-time blocking.

For example, as shown in FIG. 8, the electronic device 10 may perform S201 to S205 N times, to obtain N execution results, and finally determine, based on the N execution results, whether to enable the mistouch prevention mode. For example, if each result indicates to enable the mistouch prevention mode, the electronic device 10 enables the mistouch prevention mode; or if M results among the N results indicate to enable the mistouch prevention mode, the electronic device 10 enables the mistouch prevention mode. N is an integer greater than 1, and M is an integer greater than 0 and less than N.

In a possible implementation, the electronic device 10 may periodically perform S201 to S205, to periodically determine whether to enable the mistouch prevention mode. Alternatively, S201 to S204 are periodically performed, and the electronic device 10 may determine, based on execution results in the N periodicities, whether to enable the mistouch prevention mode.

It may be understood that the foregoing period may be related to a motion state of the electronic device 10. In other words, the electronic device 10 may determine the period based on the motion state of the electronic device 10. For example, when the electronic device 10 is in a moving state, the electronic device 10 may shorten the foregoing period to improve accuracy of a detection result; or when the electronic device 10 is in a static state, the electronic device 10 may prolong the foregoing period to reduce power consumption of the electronic device 10.

It may be understood that the actions of the electronic device 10 in the foregoing steps may be performed by the processor 110 in the electronic device 10 shown in FIG. 1 by invoking application program code stored in the memory 130. This is not limited in this application.

This application further provides an electronic device. The electronic device may be the electronic device in the foregoing method embodiments, an apparatus including the foregoing electronic device, or a component that can be used in the electronic device. It may be understood that, to implement the foregoing functions, the electronic device includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the electronic device may be divided into functional modules based on the foregoing method example. For example, functional modules corresponding to various functions may be obtained through division, or at least two functions may be integrated into one processing module. The integrated module may be implemented in a form of hardware, or may be implemented in a form of a software functional module. It may be understood that division into the modules in this application is an example, and is merely logical function division. During actual implementation, there may be another division manner.

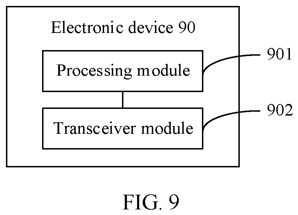

For example, when the functional modules are obtained through division in an integrated manner, FIG. 9 is a diagram of a structure of an electronic device 90. The electronic device 90 includes a processing module 901 and a transceiver module 902. The processing module 901 may also be referred to as a processing unit, and is configured to perform an operation other than receiving and sending operations, which may be, for example, a processing circuit or a processor. The transceiver module 902 may also be referred to as a transceiver unit, and is configured to perform a transceiver operation, for example, may be a transceiver circuit, a transceiver machine, or a transceiver. For example, the transceiver module 902 includes the first transmitter, the second transmitter, the first receiver, and the second receiver.

In some embodiments, the electronic device 90 may further include a storage module (not shown in FIG. 9), configured to store program instructions and data.

For example, the electronic device 90 is configured to implement functions of an electronic device. The electronic device 90 is, for example, the electronic device in the embodiment shown in FIG. 2.

The processing module 901 is configured to determine a posture of the electronic device 90. For example, the processing module 901 may be configured to perform S201.

The processing module 901 is further configured to determine a signal transmission mode based on the posture of the electronic device 90. The signal transmission mode includes sending a signal through the first transmitter, sending a signal through the second transmitter, or sending signals through the first transmitter and the second transmitter. For example, the processing module 901 may be configured to perform S202.

The transceiver module 902 is configured to send a first signal based on the signal transmission mode. For example, the transceiver module 902 may be configured to perform S203.

The transceiver module 902 is further configured to receive a second signal. The second signal includes the reflected signal of the first signal. For example, the transceiver module 902 may be configured to perform S204.

The processing module 901 is further configured to determine, based on the first signal and the second signal, whether to enable the mistouch prevention mode. The processing module 901 may be configured to perform S205.

In a possible implementation, when the first side of the electronic device 90 is facing upward, the signal transmission mode is sending the signal through the second transmitter; when the first side of the electronic device 90 is facing downward, the signal transmission mode is sending the signal through the first transmitter; or when the electronic device 90 is placed horizontally, the signal transmission mode is sending the signal through the first transmitter and/or the second transmitter.

In a possible implementation, the first side of the electronic device 90 is facing upward when an included angle between a first direction and a second direction is greater than or equal to a first threshold; the first side of the electronic device 90 is facing downward when an included angle between a first direction and a second direction is less than or equal to a second threshold; or the electronic device 90 is placed horizontally when an included angle between a first direction and a second direction is less than a first threshold and greater than a second threshold. The first direction is a direction from the second side of the electronic device 90 to the first side of the electronic device 90, and the second direction is a direction of gravity.

In a possible implementation, the transceiver module 902 is specifically configured to receive the second signal through the first receiver and/or receive the second signal through the second receiver.

In a possible implementation, the processing module 901 is specifically configured to determine transmission status information of the first signal based on the first signal and the second signal; and the processing module 901 is further specifically configured to determine, based on the transmission status information of the first signal, whether to enable the mistouch prevention mode.

In a possible implementation, the transmission status information of the first signal includes a delay between the first signal and the second signal; and the processing module 901 is specifically configured to: enable the mistouch prevention mode when the delay is less than or equal to a first duration; or skip enabling the mistouch prevention mode when the delay is greater than a first duration.

In a possible implementation, the transmission status information of the first signal includes a delay between the first signal and the second signal and a quantity of second signals received in different directions; and the processing module 901 is specifically configured to: enable the mistouch prevention mode when the delay is less than or equal to a first duration and the quantity is greater than or equal to a third threshold; or skip enabling the mistouch prevention mode when the delay is greater than a first duration or the quantity is less than a third threshold.

In a possible implementation, the transmission status information of the first signal includes a percentage of signal strength of the second signal to signal strength of the first signal; and the processing module 901 is specifically configured to: enable the mistouch prevention mode when the percentage is greater than or equal to a fourth threshold; or skip enabling the mistouch prevention mode when the percentage is less than a fourth threshold.

In a possible implementation, the transmission status information of the first signal includes a percentage of signal strength of the second signal to signal strength of the first signal and a quantity of second signals received in different directions; and the processing module 901 is specifically configured to: enable the mistouch prevention mode when the percentage is greater than or equal to a fourth threshold and the quantity is greater than or equal to a fifth threshold; or skip enabling the mistouch prevention mode when the percentage is less than a fourth threshold or the quantity is less than a fifth threshold.

In a possible implementation, the processing module 901 is specifically configured to enable the mistouch prevention mode when signal strength of the second signal is greater than or equal to first strength, where the first strength is obtained based on signal strength of the first signal.

In a possible implementation, the processing module 901 is further configured to determine a motion state of the electronic device 90; and the processing module 901 is further configured to determine a period of the first signal based on the motion state.

In a possible implementation, the processing module 901 is further configured to determine ambient noise of the electronic device 90; and the processing module 901 is further configured to determine the power of the first signal based on the noise.

In a possible implementation, the processing module 901 is further configured to perform a first operation, where the first operation includes at least one of the following: a screen lock operation, dimming a screen of the electronic device 90, stopping identifying a physiological feature of a user, stopping identifying a gesture of a user, stopping screen unlocking, or stopping responding to an operation of a user.

When the electronic device 90 is configured to implement functions of the electronic device, for other functions that can be implemented by the electronic device 90, refer to related descriptions of the embodiment shown in FIG. 2. Details are not described again.

In a simple embodiment, a person skilled in the art may figure out that the electronic device 90 may be in the form shown in FIG. 1. For example, the processor 110 in FIG. 1 may invoke computer-executable instructions stored in the memory 130, to cause the electronic device 90 to perform the method in the foregoing method embodiments.

For example, a function/implementation process of the processing module 901 in FIG. 9 may be implemented by the processor 110 in FIG. 1 by invoking the computer-executable instructions stored in the memory 130, and a function/implementation process of the transceiver module 902 in FIG. 9 may be implemented by the transmitter 151, the transmitter 152, the receiver 153, and the receiver 154 in FIG. 1.

It may be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built in a system on chip (system on chip, SoC) or an ASIC, or may be an independent semiconductor chip. In addition to the core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this application.

Optionally, this application further provides a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the electronic device in any one of the foregoing embodiments, for example, a hard disk drive or a memory of the electronic device. The computer-readable storage medium may alternatively be an external storage device of the electronic device, for example, a plug-in hard disk drive, a smart media card (smart media card, SMC), a secure digital (secure digital, SD) card, or a flash card (flash card) that is configured on the electronic device. Further, the computer-readable storage medium may alternatively include both an internal storage unit and an external storage device of the foregoing electronic device. The computer-readable storage medium is configured to store the computer program and other programs and data required by the foregoing electronic device. The computer-readable storage medium may be further configured to temporarily store data that has been output or is to be output.

Optionally, this application further provides a computer program product. All or a part of procedures in the foregoing method embodiments may be implemented by a computer program instructing related hardware. The program may be stored in the computer program product. When the program is executed, the procedures in the foregoing method embodiments may be performed.

Optionally, this application further provides computer instructions. All or a part of the procedures in the foregoing method embodiments may be completed by computer instructions instructing relevant hardware (for example, a computer, a processor, or an electronic device). The program may be stored in the computer-readable storage medium or the computer program product.

The foregoing descriptions about implementations allow a person skilled in the art to understand that, for the purpose of convenient and brief description, division into the foregoing functional modules is taken as an example for illustration. In actual application, the foregoing functions can be allocated to different functional modules and implemented according to a requirement, that is, an inner structure of an electronic device is divided into different functional modules to implement all or a part of the functions described above.

In the several embodiments provided in this application, it should be understood that the disclosed method and electronic device may be implemented in other manners. For example, the described electronic device embodiments are merely an example. For example, division into the modules or units is merely logical function division and may be other division during actual implementation. For example, a plurality of units or components may be combined or integrated into another electronic device, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A mistouch prevention method, wherein the method is applied to an electronic device, at least one transmitter is deployed on each of a first side and a second side of the electronic device, the first side is different from the second side, the at least one transmitter deployed on the first side comprises a first transmitter, and the at least one transmitter deployed on the second side comprises a second transmitter; and the method comprises:
step 1: determining a posture of the electronic device;
step 2: determining a signal transmission mode based on the posture of the electronic device, wherein the signal transmission mode comprises sending a signal through the first transmitter, sending a signal through the second transmitter, or sending signals through the first transmitter and the second transmitter;
step 3: sending a first signal based on the signal transmission mode; and
step 4: receiving a second signal, wherein the second signal comprises a reflected signal of the first signal; and
determining, based on the first signal and the second signal, whether to enable a mistouch prevention mode.

2. The method according to claim 1, wherein the determining the signal transmission mode based on the posture of the electronic device comprises:
when the first side of the electronic device is facing downward, determining that the signal transmission mode is sending the signal through the first transmitter; and
the determining, based on the first signal and the second signal, whether to enable the mistouch prevention mode comprises:
sending a third signal through the second transmitter when it is determined, based on the first signal and the second signal, not to enable the mistouch prevention mode;
receiving a fourth signal, wherein the fourth signal comprises a reflected signal of the third signal; and
determining, based on the first signal, the second signal, the third signal, and the fourth signal, whether to enable the mistouch prevention mode.

3. The method according to claim 1, wherein the determining the signal transmission mode based on the posture of the electronic device comprises:
when the first side of the electronic device is facing upward, determining that the signal transmission mode is sending the signal through the second transmitter; and
the determining, based on the first signal and the second signal, whether to enable the mistouch prevention mode comprises:
sending a third signal through the first transmitter when it is determined, based on the first signal and the second signal, not to enable the mistouch prevention mode;
receiving a fourth signal, wherein the fourth signal comprises a reflected signal of the third signal; and
determining, based on the first signal, the second signal, the third signal, and the fourth signal, whether to enable the mistouch prevention mode.

4. The method according to claim 1, wherein the determining the signal transmission mode based on the posture of the electronic device comprises:
when the first side of the electronic device is facing upward, determining that the signal transmission mode is sending the signal through the second transmitter;
when the first side of the electronic device is facing downward, determining that the signal transmission mode is sending the signal through the first transmitter; or
when the electronic device is placed horizontally, determining that the signal transmission mode is sending the signal through the first transmitter and/or the second transmitter.

5. The method according to any one of claims 2 to 4, wherein
the first side of the electronic device is facing upward when an included angle between a first direction and a second direction is greater than or equal to a first threshold;
the first side of the electronic device is facing downward when an included angle between a first direction and a second direction is less than or equal to a second threshold; or
the electronic device is placed horizontally when an included angle between a first direction and a second direction is less than a first threshold and greater than a second threshold, wherein
the first direction is a direction from the second side of the electronic device to the first side of the electronic device, and the second direction is a direction of gravity.

6. The method according to claim 1 or 4, wherein at least one receiver is deployed on each of the first side and the second side, the at least one receiver deployed on the first side comprises a first receiver, and the at least one receiver deployed on the second side comprises a second receiver; and
the receiving the second signal comprises: receiving the second signal through the first receiver and/or the second receiver.

7. The method according to any one of claims 1 to 6, wherein the determining, based on the first signal and the second signal, whether to enable the mistouch prevention mode comprises:
determining transmission status information of the first signal based on the first signal and the second signal; and
determining, based on the transmission status information, whether to enable the mistouch prevention mode.

8. The method according to claim 7, wherein the transmission status information comprises a delay between the first signal and the second signal; and the determining, based on the transmission status information, whether to enable the mistouch prevention mode comprises:
enabling the mistouch prevention mode when the delay is less than or equal to a first duration; or
skipping enabling the mistouch prevention mode when the delay is greater than a first duration.

9. The method according to claim 7, wherein the transmission status information comprises a delay between the first signal and the second signal and a quantity of second signals received in different directions; and the determining, based on the transmission status information, whether to enable the mistouch prevention mode comprises:
enabling the mistouch prevention mode when the delay is less than or equal to a first duration and the quantity is greater than or equal to a third threshold; or
skipping enabling the mistouch prevention mode when the delay is greater than a first duration or the quantity is less than a third threshold.

10. The method according to claim 7, wherein the transmission status information comprises a percentage of signal strength of the second signal to signal strength of the first signal; and the determining, based on the transmission status information, whether to enable the mistouch prevention mode comprises:
enabling the mistouch prevention mode when the percentage is greater than or equal to a fourth threshold; or
skipping enabling the mistouch prevention mode when the percentage is less than a fourth threshold.

11. The method according to claim 7, wherein the transmission status information comprises a percentage of signal strength of the second signal to signal strength of the first signal and a quantity of second signals received in different directions; and the determining, based on the transmission status information, whether to enable the mistouch prevention mode comprises:
enabling the mistouch prevention mode when the percentage is greater than or equal to a fourth threshold and the quantity is greater than or equal to a fifth threshold; or
skipping enabling the mistouch prevention mode when the percentage is less than a fourth threshold or the quantity is less than a fifth threshold.

12. The method according to any one of claims 1 to 6, wherein the determining, based on the first signal and the second signal, whether to enable the mistouch prevention mode comprises:
enabling the mistouch prevention mode when signal strength of the second signal is greater than or equal to first strength, wherein the first strength is obtained based on signal strength of the first signal.

13. The method according to any one of claims 1 to 12, wherein the method further comprises:
performing steps 1 to 4 multiple times; and
the determining, based on the first signal and the second signal, whether to enable the mistouch prevention mode comprises:
determining, based on the first signals and the second signals that are obtained by performing steps 1 to 4 multiple times, whether to enable the mistouch prevention mode.

14. The method according to any one of claims 1 to 13, wherein the method further comprises:
determining a motion state of the electronic device; and
determining a period of the first signal based on the motion state.

15. The method according to any one of claims 1 to 14, wherein the method further comprises:
determining ambient noise of the electronic device; and
determining transmit power of the first signal based on the noise.

16. The method according to claim 2 or 3, wherein the determining, based on the first signal, the second signal, the third signal, and the fourth signal, whether to enable the mistouch prevention mode comprises:
determining transmission status information of the first signal based on the first signal and the second signal;
determining transmission status information of the third signal based on the third signal and the fourth signal; and
determining, based on the transmission status information of the first signal and the transmission status information of the third signal, whether to enable the mistouch prevention mode.

17. The method according to claim 2 or 3, wherein the determining, based on the first signal, the second signal, the third signal, and the fourth signal, whether to enable the mistouch prevention mode comprises:
enabling the mistouch prevention mode when signal strength of the second signal is greater than or equal to first strength, and/or signal strength of the fourth signal is greater than or equal to second strength, wherein the first strength is obtained based on signal strength of the first signal, and the second strength is obtained based on signal strength of the third signal.

18. The method according to any one of claims 1 to 17, wherein after determining to enable the mistouch prevention mode, the method further comprises:
performing a first operation, wherein the first operation comprises at least one of the following: a screen lock operation, dimming a screen of the electronic device, stopping identifying a physiological feature of a user, stopping identifying a gesture of a user, stopping screen unlocking, or stopping responding to an operation of a user.

19. An electronic device, comprising a unit or a module configured to perform the method according to any one of claims 1 to 18.

20. A chip, deployed in an electronic device, wherein at least one transmitter is deployed on each of a first side and a second side of the electronic device, the first side is different from the second side, the at least one transmitter deployed on the first side of the electronic device comprises a first transmitter, and the at least one transmitter deployed on the second side of the electronic device comprises a second transmitter; and the chip is configured to perform the following operations:
determining a posture of the electronic device;
determining a signal transmission mode based on the posture of the electronic device, wherein the signal transmission mode comprises sending a signal through the first transmitter, sending a signal through the second transmitter, or sending signals through the first transmitter and the second transmitter;
controlling, based on the signal transmission mode, the first transmitter and/or the second transmitter to send a first signal;
obtaining a second signal, wherein the second signal comprises a reflected signal of the first signal; and
determining, based on the first signal and the second signal, whether to enable a mistouch prevention mode.

21. An electronic device, comprising a processor, wherein the processor is coupled to a memory, and the memory is configured to store a program or instructions; and when the program or the instructions are executed by the processor, the electronic device is caused to perform the method according to any one of claims 1 to 18.

22. A computer-readable storage medium, wherein the computer-readable storage medium stores a computer program or instructions; and when the computer program or the instructions are executed, a computer is caused to perform the method according to any one of claims 1 to 18.

23. A computer program product, wherein the computer program product comprises computer program code; and when the computer program code is executed on a computer, the computer is caused to implement the method according to any one of claims 1 to 18.
